# EUROPÄISCHE PATENTSCHRIFT

(11) **EP 3 755 742 B1**
(45) Veröffentlichungstag und Bekanntmachung des Hinweises auf die Patenterteilung: **20.07.2022**
(21) Anmeldenummer: 19704834.1
(22) Anmeldetag: 20.02.2019
(51) Int. Cl.: C08J 9/236, C08L 25/06, C08L 61/28

(54) **FORMTEIL SOWIE MISCHUNG UND VERFAHREN ZU SEINER HERSTELLUNG**
CASTING ITEM AND MIXTURE AND METHOD OF PREPARING SAME
PIÈCE MOULÉE ET MÉLANGE ET SON PROCÉDÉ DE FABRICATION

(30) Priorität: 21.02.2018 EP 18157941
(43) Veröffentlichungstag der Anmeldung: 30.12.2020
(73) Patentinhaber: BASF SE, 67056 Ludwigshafen am Rhein (DE)
(72) Erfinder: MÜLLER, Christian, 1410 Waterloo (BE); QUELL, Aggeliki, 67056 Ludwigshafen (DE); AHMADNIAN, Fatemeh, 67056 Ludwigshafen (DE); REUTER, Frank, 67056 Ludwigshafen (DE)
(86) Internationale Anmeldenummer: PCT/EP2019/054168
(87) Internationale Veröffentlichungsnummer: WO 2019/162304

(56) Entgegenhaltungen:
- EP-A1- 3 333 216
- DE-A1- 2 352 969

## Beschreibung

Die vorliegende Erfindung betrifft ein Formteil, z. B. eine Platte oder einen Block, welches eine Matrixkomponente und in die Matrixkomponente eingebettet separate, geschäumte Polystyrol-Partikel und ein oder mehrere feste Additive umfasst. Die vorliegende Erfindung betrifft zudem eine Mischung und ein Verfahren zur Herstellung eines Formteils. Die vorliegende Erfindung betrifft ebenfalls die Verwendung eines erfindungsgemäßen Formteils als Isoliermaterial, vorzugsweise für Gebäude.

Bei der Schall- und/oder Wärmedämmung von Gebäudewänden oder -decken finden häufig Hartschaumplatten, insbesondere hergestellt aus EPS-Hartschaumstoffen, als Dämmelemente Einsatz. Die Kurzbezeichnung EPS steht dabei für expandiertes (d.h. geschäumtes) Polystyrol. Die aus EPS-Hartschaumstoffen hergestellten Hartschaumplatten weisen zum einen gute Wärmedämmeigenschaften auf und sind zum anderen relativ kostengünstig herstellbar. Zudem sind sie auf der Baustelle einfach zu handhaben, da sie formstabil und wasserunempfindlich sind.

EPS-Hartschaumstoffe sind organische Materialien und damit leicht brennbar. Schaumstoffe aus EPS-Hartschaum beginnen typischerweise bei einer Temperatur über 100 °C langsam zu erweichen und dabei zu schrumpfen. Bei weiterer Erwärmung schmelzen sie. Aus der Schmelze entwickeln sich nachteiligerweise bei längerer Wärmeeinwirkung gasförmige, brennbare Zersetzungsprodukte, die unter Brandbedingungen bei einer Temperatur oberhalb 350 °C entzündbare Gase bilden.

Aufgrund des nachteiligen Brandverhaltens von EPS-Hartschaumstoffen wird häufig und z.B. in Deutschland ausschließlich flammgeschützter EPS-Hartschaum eingesetzt. Flammgeschützter EPS-Hartschaum schrumpft bei kurzer Einwirkung einer Zündflamme, z.B. eines Zündholzes, von der Zündquelle weg, ohne entflammt zu werden. Unter dem unmittelbaren Einfluss anderer brennbarer Stoffe mit brandsicherheitlich ungünstigerem Verhalten bzw. in einem Vollbrand mit extrem hoher Wärmeentwicklung verbrennt allerdings auch das bislang in der Praxis eingesetzte flammgeschützte EPS vollständig.

Aus dem Stand der Technik (z.B. aus WO 2011/113795 A2) ist bekannt, dass die Brandsicherheit von auf geschäumten Polystyrol-Partikeln beruhenden Schall- und/oder Wärmedämmplatten noch weiter gesteigert werden kann, indem die verwendeten Polystyrol-Partikel in ein Bindemittel eingebracht werden, welches zusätzlich zu den Polystyrol-Partikeln als weiteres Additiv einen Füllstoff und/oder ein Flammschutzmittel enthält. Als Bindemittel können z.B. wässrige Melamin-Formaldehyd-Vorkondensat-Lösungen eingesetzt werden, welche durch die Zugabe eines Härters wie beispielsweise Ameisensäure und anschließender Temperaturbehandlung zu einem festen Melamin-Formaldehyd-Kondensat reagieren.

Wässrige Melamin-Formaldehyd-Vorkondensat-Lösungen werden industriell in großen Mengen hergestellt und finden üblicherweise in der Spanplattenherstellung breite Anwendung. Ein gebräuchliches Verfahren zur Herstellung solcher Lösungen besteht darin, dass man in einem beheizbaren Rührautoklaven die Komponenten zugibt und dann bei erhöhter Temperatur über einen längeren Zeitraum kondensiert. Melamin-Formaldehyd-Vorkondensat-Lösungen können ebenfalls kontinuierlich hergestellt werden, indem man Melamin, Formaldehyd und gegebenenfalls Modifizierungsmittel und/oder Zusatzstoffe in einen kontinuierlich arbeitenden Mischer dosiert, die homogene Mischung in einen ein- oder zweiwelligen Extruder leitet, bei erhöhter Temperatur kondensiert, abkühlt und austrägt.

WO 2012/113740 offenbart das Verschäumen von partikelförmigen organischen oder anorganischen Füllmaterialien mit Melamin-Formaldehyd-Kondensationsprodukten. Es können auf diese Weise gefüllte Melamin-Formaldehyd-Kondensate bereitgestellt werden, die die guten mechanischen Eigenschaften der ungefüllten Schaumstoffe weitgehend erhalten.

Das Dokument WO 2017/136878 A1 betrifft ein Verfahren zur Herstellung eines Polystyrol-Phenolschaum-Komposits, umfassend die Schritte: a) Bildung einer Mischung von thermoplastischen Mikrokügelchen, Phenolresolharz, Polystyrol-Partikeln und mindestens einem sauren Katalysator; und b) Härten der in a) gebildeten Mischung bei einer Temperatur über 40 °C.

Das Dokument CN103711211 (A) offenbart ein "Modified melamine formaldehyde resinbased EPS flame retardant thermal insulating board and preparation method thereof' (englische Übersetzung des Titels gemäß Übersetzung aus Espacenet).

Das Dokument EP 2 735 584 A1 offenbart einen thermoverformbaren Melamin-/Formaldehyd-Schaumstoff, enthaltend 0,1 bis 50 Gew.-% wenigstens eines partikelförmigen Füllmaterials.

Das Dokument EP 3 184 709 A1 offenbart ein Verfahren zur Herstellung eines flammgeschützten Dämmelementes, bei welchem vorgeschäumte Polystyrol-Partikel verwendet werden, von denen zumindest ein Teil vor dem Einfüllen in eine Form und dem Versintern beschichtet werden.

Das Dokument EP 3 208 299 A1 offenbart ein Verfahren zur Herstellung eines Schall- und/oder Wärmedämmelements unter Verwendung schäumbarer und/oder vorgeschäumter Polymer-Partikel, die mit einem Bindemittel, vorzugsweise mit einem organischen Bindemittel, beschichtet und anschließend einem Formgebungsprozess unterzogen werden, bei dem die Polymer-Partikel miteinander verklebt und/oder versintert werden.

In der WO 2008/145599 A1 ist eine Zusammensetzung offenbart, umfassend (i) expandierte oder expandierbare Polystyrol-Kügelchen oder -Partikel, (ii) eine intumeszierende Substanz, und (iii) ein feuerbeständiges Bindemittel.

Das Dokument WO 2011/113795 A2 offenbart einen Verbundschaumstoff, enthaltend A) geschäumte Partikel, enthaltend A1) 25 bis 95 Gew.-% Styrolpolymer(e), A2) gegebenenfalls ein Treibmittel, A3) gegebenenfalls ein oder mehrere Additive, B) eine Aminoplastkomponente, enthaltend B1) 1 bis 65 Gew.-% gehärtetes, gegebenenfalls modifiziertes und gegebenenfalls geschäumtes Aminoplastharz, B2) 0,1 bis 20 Gew.-% an einer oder mehreren flammhemmenden organischen Phosphorverbindungen mit einem Phosphorgehalt von 5 bis 80 Gew.-% (bezogen auf die jeweilige Verbindung) und/oder Blähgraphit, B3) gegebenenfalls einen oder mehrere flammhemmende Synergisten für die Komponente B2), B4) gegebenenfalls ein Treibmittel sowie B5) gegebenenfalls ein oder mehrere Additive.

Das Dokument DE 23 52 969 A1 offenbart ein Verfahren zur Herstellung von harten Schaumstoffen mit hoher Feuerwiderstandsdauer und niedriger Wärmeleitfähigkeit, dadurch gekennzeichnet, dass man ein Gemisch aus a) geschäumten Rundpartikeln aus einem thermoplastischen Styrolpolymerisat, b) einer wässrigen Lösung von 50 bis 300 Gewichtsteilen, bezogen auf 100 Gewichtsteile des Styrolpolymerisates, eines härtbaren Harzes auf Basis eines Melamin/Formaldehyd-Kondensationsproduktes und c) einem feinteiligen anorganischen Füllstoff in Mengen von 25 bis 200 Volumenteilen, bezogen auf 100 Volumenteile des Harzes, um mindestens 10% seines Volumens zusammendrückt und das Harz bei Temperaturen unterhalb der Siedetemperatur der wässrigen Lösung aushärtet. Das Dokument DE 23 52 969 A1 offenbart zudem harte Schaumstoffe mit hoher Feuerwiderstandsdauer und niedriger Wärmeleitfähigkeit, enthaltend ein Gemisch von a) geschäumten Rundpartikeln aus einem thermoplastischen Styrolpolymerisat, b) 50 bis 300 Gewichtsteilen, bezogen auf 100 Gewichtsteile des Styrolpolymerisates, eines ausgehärteten Harzes auf Basis eines Melamin/Formaldehyd-Kondensationsproduktes und c) einem feinteiligen anorganischen Füllstoff in Mengen von 25 bis 200 Volumenteilen, bezogen auf 100 Volumenteile des Harzes.

Das Dokument EP 3 333 216 A1, veröffentlicht am 13. Juni 2018, offenbart eine Mischung zur Herstellung eines ähnlichen Formteils sowie ein Verfahren zur Herstellung des Formteils unter Verwendung der Mischung. Als Härter eingesetzt werden bevorzugt Ammoniumsalze wie Ammoniumsulfat; als Alternative dazu können auch organische Säuren eingesetzt werden, wobei explizit verschiedene Arylsulfonsäuren erwähnt werden.

Obwohl die bekannten Materialien bereits gute Eigenschaften aufweisen und sich insbesondere als Isoliermaterialien eignen, besteht doch ein beständiger Bedarf an Verbesserungen, unter anderem betreffend das Brandschutzverhalten, die Isolierfähigkeit und die Verarbeitbarkeit. So sind die bekannten Materialien, trotz inhärenter flammschützender Eigenschaften, immer noch bei Erzeugung genügend hoher Temperaturen entflammbar und daher regelmäßig der Baustoffklasse B (brennbare Baustoffe) gemäß DIN 4102-1 zuzuordnen.

Eine drastische Absenkung des Anteils an Polystyrol-Partikeln innerhalb der Mischung zur Herstellung eines Dämmelementes könnte zwar zu einer Verbesserung der Brandsicherheit führen würde, gleichzeitig allerdings zwangsläufig in einer nachteiligen Veränderung der Wärmedämmeigenschaften eines hieraus hergestellten Dämmelementes resultieren, wenn die fehlenden Polystyrol-Partikel nicht durch gleichwertige Dämmstoffe ersetzt würden. Um zudem weiterhin die mechanische Stabilität des Dämmelementes zu gewährleisten, müsste der Bindemittelanteil erhöht werden. Ein höherer Bindemittelanteil wiederum macht den Einsatz eines nicht brennbaren Bindemittels erforderlich. Es ist jedoch allgemein bekannt, dass die Bindekraft nicht brennbarer, in der Regel anorganischer Bindemittel im Vergleich zu organischen Bindemitteln herabgesetzt ist, so dass eine Entmischung der Ausgangsstoffe in der Form zu befürchten ist, welche die Qualität des derart hergestellten Dämmelementes beeinträchtigt. Eine Erhöhung des Bindemittelanteils führt zudem zwangsläufig zu einer Erhöhung der Dichte des resultierenden Formteiles, durch welche dessen Einsatz als Isoliermaterial für z.B. Gebäudewände in Frage gestellt wird. Eine Dichte eines Formteils als Isoliermaterial für Gebäude von größer als 60 kg/m³ wird von Fachleuten häufig als inakzeptabel eingeschätzt.

Es war eine primäre Aufgabe der vorliegenden Erfindung, einzelne oder sämtliche der vorstehend beschriebenen Nachteile zu beseitigen oder zumindest zu lindern.

Ausgehend von dem vorstehend genannten Stand der Technik war es eine spezifische Aufgabe der vorliegenden Erfindung, ein flammgeschütztes, Polystyrol-Partikel enthaltendes Formteil (insbesondere in Form einer Platte oder eines Blockes) anzugeben, das einerseits eine gegenüber herkömmlichen Polystyrol-Hartschaumplatten erhöhte Flammschutzwirkung sowie andererseits hervorragende Wärmedämmeigenschaften aufweist. Zugleich sollte das Formteil über eine hohe mechanische Stabilität sowie über eine für den Einsatz als Isoliermaterial akzeptable Dichte verfügen.

Diese Aufgabe ist eng verknüpft mit der komplementären Aufgabenstellung, eine Mischung zur Herstellung eines entsprechenden Formteils sowie ein Verfahren zur Herstellung eines Formteils anzugeben.

Die vorliegende Erfindung sollte es außerdem vorzugsweise ermöglichen, das anzugebende Formteil als Isoliermaterial, vorzugsweise für Gebäude, insbesondere für Gebäudeteile, zu verwenden.

Weitere Aufgaben ergeben sich aus der nachfolgenden Beschreibung und den Patentansprüchen.

Der Gegenstand der vorliegenden Erfindung wird in den beigefügten Patentansprüchen und der vorliegenden Beschreibung definiert.

Es wurde gefunden, dass Formteile (insbesondere Platten und Blöcke) auf Basis von geschäumten Polystyrol-Partikeln und einem Melamin-Formaldehyd-Kondensat durch Zusatz eines oder mehrerer fester Additive ausgewählt aus der Gruppe bestehend aus (i) anorganischen Füllstoffen und (ii) Flammschutzmitteln hervorragende Flammschutzeigenschaften aufweisen, ohne dass die Wärmedämmeigenschaften bzw. die mechanischen Eigenschaften im Vergleich zu demselben Produkt ohne Flammschutzmittel nachteilig beeinflusst werden, wenn das Verhältnis der Gesamtmasse des Melamin-Formaldehyd-Kondensats zu der Gesamtmasse der separaten, geschäumten Polystyrol-Partikel größer ist als 2,2, vorzugsweise 2,3 oder größer ist und die Dichte des Formteils im Bereich von 19 bis 50 kg/m³ liegt.

Die vorstehend genannte Aufgabe wird gemäß einem ersten Aspekt der Erfindung durch ein Formteil gelöst, umfassend
- eine Matrixkomponente umfassend Melamin-Formaldehyd-Kondensat
   und
- in die Matrixkomponente eingebettet
   separate, geschäumte Polystyrol-Partikel
      und
   ein oder mehrere feste Additive ausgewählt aus der Gruppe bestehend aus
   (i) anorganischen Füllstoffen und (ii) Flammschutzmitteln,
   wobei
- das Verhältnis der Gesamtmasse des Melamin-Formaldehyd-Kondensats zu der Gesamtmasse der separaten, geschäumten Polystyrol-Partikel größer ist als 2,2, vorzugsweise 2,3 oder größer ist
   und
- die Dichte des Formteils im Bereich von 19 bis 50 kg/m³ liegt.

Die Erfindung betrifft gemäß einem zweiten, korrespondierenden Aspekt auch eine Mischung zur Herstellung eines erfindungsgemäßen Formteils, umfassend
- 33 bis 65 Gew.-% Melamin-Formaldehyd-Vorkondensat, bezogen auf die Gesamtmenge der Mischung,
   oder
   25 bis weniger als 33 Gew.-% Melamin-Formaldehyd-Vorkondensat, vorzugsweise 25 bis 31 Gew.-%, bezogen auf die Gesamtmenge der Mischung,
- 1 bis 3,5 Gew.-% einer organischen Säure ausgewählt aus der Gruppe bestehend aus Ameisensäure, Zitronensäure und deren Mischungen, vorzugsweise 1,5 bis 2,8 Gew.-%, bezogen auf die Gesamtmenge der Mischung,
   oder
   0,2 bis weniger als 1 Gew.-% einer organischen Säure ausgewählt aus der Gruppe bestehend aus Ameisensäure, Zitronensäure und deren Mischungen, vorzugsweise 0,2 bis 0,5 Gew.-%, bezogen auf die Gesamtmenge der Mischung,
- 6 bis 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise 8 bis 10 Gew.-%, bezogen auf die Gesamtmenge der Mischung,
   oder
   mehr als 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise mehr als 12 bis 35 Gew.-%, besonders vorzugsweise mehr als 12 bis 30 Gew.-%, ganz besonders vorzugsweise mehr als 12 bis 25 Gew.-%, am bevorzugtesten mehr als 12 bis 22 Gew.-%, bezogen auf die Gesamtmende der Mischung,
   wobei jeweils vorzugsweise 50 Gew.-% oder mehr der Gesamtmenge des einen oder der mehreren festen Additive Flammschutzmittel sind,
- 25 bis 35 Gew.-% vorgeschäumte Polystyrol-Partikel, vorzugsweise 27 bis 33 Gew.-%, bezogen auf die Gesamtmenge der Mischung, mit einem Pentan-Gehalt von bis zu 4 Gew.-%, bevorzugt im Bereich von 0,1 bis 4 Gew.-%, vorzugsweise 0,1 bis 0,4 Gew.-% oder 2 bis 4 Gew.-%,
- bis zu 30 Gew.-% insgesamt an inerten Flüssigkeiten ausgewählt aus der Gruppe bestehend aus Wasser und anderen inerten Flüssigkeiten, vorzugsweise bis zu 30 Gew.-% Wasser, bezogen auf die Gesamtmenge der Mischung.

Die Erfindung betrifft gemäß einem dritten, korrespondierenden Aspekt ein Verfahren zur Herstellung eines Formteils, vorzugsweise eines erfindungsgemäßen Formteils (wie vorstehend definiert, vorzugweise wie nachfolgend als bevorzugt bezeichnet), mit folgenden Schritten:
- Herstellen oder Bereitstellen einer erfindungsgemäßen Mischung (wie vorstehend definiert, vorzugsweise wie nachfolgend als bevorzugt bezeichnet),
- Einbringen der hergestellten oder bereitgestellten Mischung in ein formgebendes Werkzeug,
- Härten des in der Mischung enthaltenen Melamin-Formaldehyd-Vorkondensats, so dass das Formteil gebildet wird.

Die Erfindung betrifft gemäß einem weiteren verwandten Aspekt die Verwendung eines erfindungsgemäßen Formteils (wie vorstehend definiert, vorzugweise wie nachfolgend als bevorzugt bezeichnet) als Isoliermaterial, vorzugsweise für Gebäude, insbesondere für Gebäudewände.

Bevorzugte erfindungsgemäße Ausgestaltungen ergeben sich aus den Unteransprüchen.

Die vorliegende Erfindung basiert auf der überraschenden experimentellen Erkenntnis, dass ein Formteil, welches
- eine Matrixkomponente umfassend Melamin-Formaldehyd-Kondensat
   und
- in die Matrixkomponente eingebettet
   separate, geschäumte Polystyrol-Partikel
      und
   ein oder mehrere feste Additive ausgewählt aus der Gruppe bestehend aus
   (i) anorganischen Füllstoffen und (ii) Flammschutzmitteln
   umfasst, eine besonders und unerwartet hohe Flammschutzwirkung und gleichzeitig eine niedrige Wärmeleitfähigkeit sowie eine gute mechanische Belastbarkeit besitzt, wenn
- das Verhältnis der Gesamtmasse des Melamin-Formaldehyd-Kondensats zu der Gesamtmasse der separaten, geschäumten Polystyrol-Partikel größer ist als 2,2, vorzugsweise 2,3 oder größer ist; die Dichte des erfindungsgemäßen Formteils liegt dabei erfindungsgemäß im Bereich von 19 bis 50 kg/m³ und das erfindungsgemäße Formteil, insbesondere in Form eines Blockes oder einer Platte, ist somit auch zur Verwendung als Isoliermaterial geeignet.

Erfindungsgemäße Formteile sind auf vielfältige Art und Weise herstellbar, wobei z. B. die Herstellung (z. B. von Blöcken oder Platten) unter Verwendung eines Formteilautomaten nur eine von mehreren Optionen ist; auf die Ausführungen zu erfindungsgemäßen Herstellungsverfahren sei verwiesen.

Das erfindungsgemäße Formteil umfasst eine Matrixkomponente, welche ihrerseits ein Melamin-Formaldehyd-Kondensat umfasst, das heißt ein Polykondensationsprodukt, das durch Umsetzung von Melamin und Formaldehyd unter Abspaltung von Wasser erhalten wird. Die während der Polykondensation stattfindenden Kondensationsreaktionen führen zur Verknüpfung der Melamin-Monomere über Methylengruppen; hierbei wird in der Praxis häufig aus einem (in der Regel wässrigen bzw. pulverförmigen) zunächst gebildeten Vorprodukt, das als Melamin-Formaldehyd-Vorkondensat bezeichnet wird, ein in Wasser unlösliches und nicht schmelzbares Produkt gebildet, das Kondensat. Das Melamin-Formaldehyd-Vorkondensat ist somit eine Vorstufe des Melamin-Formaldehyd-Kondensates. Ein solches Vorkondensat liegt vorzugsweise in wässriger Lösung bzw. Dispersion oder als Pulver vor, und nach Zugabe eines Härters (siehe dazu unten) sowie anschließende Temperaturbehandlung resultiert durch Aushärten ein Melamin-Formaldehyd-Kondensat.

In manchen Fällen ist es vorteilhaft, wenn das Melamin-Formaldehyd-Kondensat eines erfindungsgemäßen Formteils mit Alkoholen, bevorzugt C₁- bis C₄-Alkoholen, insbesondere Methanol oder Ethanol, teilweise oder vollständig verethert ist. Als weitere Carbonyl-Verbindungen neben Formaldehyd können zur Herstellung der Melamin-Formaldehyd-Kondensate eines erfindungsgemäßen Formteils beispielsweise Acetaldehyd, Trimethylolacetaldehyd, Acrolein, Furfurol, Glyoxal, Phthaldialdehyd und/oder Terephthaldialdehyd eingesetzt werden; die obigen Ausführungen zur Herstellung gelten entsprechend.

Melamin-Formaldehyd-Vorkondensate zur Verwendung im Rahmen der vorliegenden Erfindung sind kommerziell erhältlich, beispielsweise von der BASF SE, Ludwigshafen, Deutschland, unter den Kauramin- und Kaurit-Marken.

Das härtbare Melamin-Formaldehyd-Vorkondensat wird üblicherweise als vorzugsweise wässrige Lösung oder Dispersion eingesetzt, die bei der Herstellung des erfindungsgemäßen Formteils gehärtet wird. In der Lösung oder Dispersion liegt das Melamin-Formaldehyd-Vorkondensat in der Regel mit 20 bis 70 Gew.-%, insbesondere mit 30 bis 60 Gew.-%, vor, bezogen auf die Gesamtmasse der Lösung oder Dispersion.

Die Herstellung von Melamin-Formaldehyd-Vorkondensat ist allgemein bekannt und beispielsweise in Ullmann's Encyclopedia of Industrial Chemistry, VCH Verlagsgesellschaft 1985, Vol. A2, Seiten 115-141 und den dort genannten Zitaten beschrieben.

Melamin-Formaldehyd-Kondensate und entsprechende Vorkondensate können unmodifiziert sein, sie können aber auch modifiziert sein. "Modifiziert" bedeutet dabei, dass bis zu 30 Mol-% der als Monomer eingesetzten Substanzen, bevorzugt aber nur bis zu 20 Mol-%, besonders bevorzugt nur bis zu 10 Mol-%, insbesondere bevorzugt nur bis zu 5 Mol-%, andere an sich bekannte Duroplastbildner, vorzugsweise Harnstoff, Phenol und Phenolderivate.

Bevorzugt wird Melamin alleine eingesetzt, d. h. andere Duroplastbildner wie Phenol, Phenolderivate und Harnstoff werden nicht eingesetzt. Das Melamin-Formaldehyd-Kondensat liegt dann insoweit unmodifiziert vor. Die Zugabe bzw. Anwesenheit anderer, nicht als Monomer fungierender Additive ist hierdurch nicht ausgeschlossen; der Gesamtanteil von Additiven ist jedoch vorzugsweise nicht größer als 10 Gew.-%, bezogen auf die Gesamtmasse des Melamin-Formaldehyd-Kondensats. Zu üblichen Additiven siehe unten.

In die Matrixkomponente des erfindungsgemäßen Formteils sind separate, geschäumte Polystyrol-Partikel eingebettet. "Separat" bedeutet in diesem Zusammenhang, dass die einzelnen in der Matrixkomponente eingebetteten Polystyrol-Partikel voneinander separiert sind, das heißt, die geschäumten Polystyrol-Partikel im Allgemeinen nicht direkt miteinander kontaktiert sind. Der Abstand zwischen zwei Polystyrol-Partikeln liegt dabei vorzugsweise im Bereich von 0,5 bis 5 mm. Diese Definition schließt nicht aus, dass sich im Ausnahmefall einzelne in der Matrixkomponente eingebettete Polystyrol-Partikel berühren. Die Matrixkomponente stellt vorzugsweise eine kontinuierliche Matrix dar; die Matrixkomponente lässt sich dann als Dispersionsmedium auffassen, in dem die separaten Polystyrol-Partikel dispergiert sind.

Erfindungsgemäß umfasst der Begriff "Polystyrol" Polymere auf Basis von Styrol, alpha-Methylstyrol oder Mischungen von Styrol und alpha-Methylstyrol; analog gilt dies für den Styrolanteil in SAN, AMSAN, ABS, ASA, MBS und MABS (siehe unten). Erfindungsgemäß verwendetes Polystyrol basiert auf mindestens 50 Gewichtsteilen Styrol und/oder alpha-Methylstyrolmonomeren.

Bevorzugt wird als Polystyrol zumindest eines der folgenden Polymere eingesetzt: glasklares Polystyrol (GPPS), Schlagzähpolystyrol (HIPS), anionisch polymerisiertes Polystyrol oder Schlagzähpolystyrol (A-IPS), Styrol-alpha-Methylstyrol-Copolymere, Acrylnitril, Butadien, Stryrolpolmyerisate (ABS), Styrol-Acrylnitril-Copolymere (SAN), Acrylnitril-alpha-Methylstyrol-Copolymere (AMSAN), Acrylnitril-Styrol-Acrylester (ASA), Methylacrylat-Butadien-Styrol (MBS), Methylmethacrylat-Butadien-Styrol (MABS) -Polymerisate oder Mischungen davon oder mit Polyphenylenether (PBE).

Das Polystyrol der erfindungsgemäß eingesetzten Polystyrol-Partikel kann im Einzelfall zur Verbesserung der mechanischen Eigenschaften oder der Temperaturbeständigkeit, gegebenenfalls unter Verwendung von Verträglichkeitsvermittlern, mit thermoplastischen Polymeren, wie Polyamiden (PA), Polyolefinen wie Polypropylen (PP) oder Polyethylen (PE), Polyacrylaten wie Polymethylmethacrylat (PMMA), Polycarbonat (PC), Polyestern wie Polyethylenterephthalat (PET) oder Polybutylenterephthalat (PBT), Polyethersulfonen (PES), Polyetherketonen, Polyethersulfiden (PES) oder Mischungen davon in Anteilen von insgesamt bis maximal 30 Gewichtsteilen, bevorzugt im Bereich von 1 bis 10 Gewichtsteilen, bezogen auf 100 Gewichtsteile der Polymerschmelze, abgemischt sein. Des Weiteren sind Mischungen in den genannten Mengenbereichen auch mit zum Beispiel hydrophob modifizierten oder funktionalisierten Polymeren oder Oligomeren, Kautschuken wie Polyacrylaten oder Polydienen, zum Beispiel Styrol-Butadien-Blockcopolymeren oder biologisch abbaubaren aliphatischen oder aliphatisch/aromatischen Copolyestern im Einzelfall vorteilhaft.

Als Verträglichkeitsvermittler eignen sich zum Beispiel Maleinsäureanhydrid, modifizierte Styrolcopolymere, Epoxidgruppen-haltige Polymere oder Organosilane.

Bevorzugt sind erfindungsgemäße Formteile, die als Polystyrol-Partikel kommerziell erhältliche Typen ausgewählt aus der Gruppe bestehend aus Neopor, Styropor und Peripor (alle von der BASF SE, Ludwigshafen, Deutschland) enthalten, wobei Neopor besonders bevorzugt ist.

Bevorzugt besitzt das Polystyrol in Polystyrol-Partikeln für bzw. in erfindungsgemäßen Formteilen ein Molekulargewicht Mw im Bereich von 120.000 bis 400.000 g/mol, besonders bevorzugt im Bereich von 180.000 bis 300.000 g/mol, gemessen mittels Gelpermeationschromatographie nach DIN 55672-1 mit refraktiometrischer Detektion (RI) gegenüber Polystyrolstandards, auf.

Bei der Herstellung erfolgt die Polymerisation beispielsweise durch Massepolymerisation, Lösungspolymerisation oder durch Emulsions-, Suspensions- oder Dispersionspolymerisation. Bevorzugt ist die Suspensionspolymerisation.

Bei der Suspensionspolymerisation wird als Monomer bevorzugt Styrol allein eingesetzt. Es kann jedoch bis zu 20% seines Gewichts durch andere ethylenisch ungesättigte Monomere wie Alkylstyrole, Divinylbenzol, Acrylnitril, 1,1-Diphenylether oder alpha-Methylstyrol ersetzt sein. Im Übrigen sind auch hier die Monomere bevorzugt, aus denen die bevorzugten Polymere erhältlich sind.

Die Herstellung der erfindungsgemäß eingesetzten Polystyrol-Partikel erfolgt im Allgemeinen aus einer Polymerschmelze, d. h. aus einer Schmelze der eingesetzten Polymere.

Der Polymerschmelze können auch Polymerrecyklate der genannten thermoplastischen Polymere, insbesondere Polystyrol in Mengen zugemischt werden, die deren Eigenschaften nicht wesentlich verschlechtern, in der Regel in Mengen von maximal 50 Gewichtsteilen, insbesondere in Mengen von 1 bis 20 Gewichtsteilen, bezogen auf 100 Gewichtsteile der Polystyrolkomponente.

Des Weiteren können der Polymerschmelze übliche Additive wie Flammschutzmittel (siehe dazu auch weiter unten) Keimbildner, Füllstoffe, Weichmacher, lösliche und unlösliche anorganische und/oder organische Farbstoffe und Pigmente, zum Beispiel IR-Absorber wie Ruß, Flockengraphit oder Aluminiumpulver, gemeinsam oder räumlich getrennt, zum Beispiel über Mischer oder Seitenextruder, zugegeben werden. In der Regel werden die Farbstoffe und Pigmente in Mengen im Bereich von 0,01 bis 30, bevorzugt im Bereich von 1 bis 5 Gewichtsteilen, bezogen auf 100 Gewichtsteile der Polystyrolkomponente, zugesetzt. Zur homogenen und mikrodispersen Verteilung der Pigmente in den erfindungsgemäß eingesetzten Polystyrol-Partikeln ist es insbesondere bei polaren Pigmenten häufig zweckmäßig, ein Dispergierhilfsmittel, zum Beispiel Organosilane, Epoxygruppen-haltige Polymere oder Maleinsäureanhydrid-gepfropfte Polystyrole einzusetzen. Bevorzugte Weichmacher sind Mineralöle, Phtalate, die bevorzugt in Mengen von 0,05 bis 10 Gewichtsteilen, bezogen auf 100 Gewichtsteile der Polymerkomponente, eingesetzt werden.

In einem erfindungsgemäßen Formteil enthaltene geschäumte Polystyrol-Partikel aus bevorzugten Styrolpolymeren werden vorzugsweise durch Einmischen eines Treibmittels in die Polymerschmelze, Extrusion und Granulierung unter Druck zu expandierbaren Polystyrol-Partikeln und durch anschließendes Vorschäumen dieser Polystyrol-Partikel und gegebenenfalls späterem weiterem Aufschäumen hergestellt.

Die treibmittelhaltige Polymerschmelze enthält in der Regel ein oder mehrere Treibmittel in homogener Verteilung in einem Anteil von insgesamt 2 bis 10 Gewichtsteilen, bevorzugt 3 bis 7 Gewichtsteilen bezogen auf 100 Gewichtsteile der Polymerschmelze. Als Treibmittel eignen sich die üblicherweise physikalischen Treibmittel wie aliphatische Kohlenwasserstoffe mit 2 bis 7 Kohlenstoffatomen, Alkohole, Ketone, Ether oder halogenierte Kohlenwasserstoffe. Bevorzugt werden iso-Butan, n-Butan, iso-Pentan, n-Pentan oder Isomerenmischungen eingesetzt, beispielsweise Mischungen aus n- und iso-Pentan. Besonders bevorzugt wird n-Pentan eingesetzt.

Erfindungsgemäß sind in die Matrixkomponente des erfindungsgemäßen Formteils ebenfalls ein oder mehrere feste Additive ausgewählt aus der Gruppe bestehend aus (i) anorganischen Füllstoffen und (ii) Flammschutzmitteln eingebettet.

Flammschutzmittel, wie in der Matrixkomponente des erfindungsgemäßen Formteils enthalten, sind chemische Verbindungen, die brennbaren Materialien zugesetzt werden, um sie besser gegen Entflammung zu schützen. Wenn das flammgeschützte Material oder ein benachbartes Material sich entzündet hat, bremst das Flammschutzmittel den Brennvorgang und verhindert so häufig die Ausbreitung des Feuers auf andere Teile. Der Begriff Flammschutzmittel beschreibt somit eine Funktion und nicht eine Klasse von chemischen Verbindungen. Flammschutzmittel sind daher notwendig, um eine hohe Brandsicherheit des erfindungsgemäßen Formteils zu gewährleisten und tragen zum Erreichen der überraschend hohen Flammschutzwirkung des erfindungsgemäßen Formteils bei. Flammschutzmittel verzögern oder verhindern den Verbrennungsprozess durch chemische oder physikalische Wirkung. Sie greifen während einer bestimmten Phase dieses Prozesses, zum Beispiel bei Erwärmung, Zersetzung, Zündung und/oder Flammenausbreitung, in den Verbrennungsvorgang ein.

Zusätzlich oder alternativ sind zur Erhöhung der Flammschutzwirkung ein oder mehrere feste anorganische, vorzugsweise mineralische Füllstoffe in die Matrixkomponente des erfindungsgemäßen Formteils eingebettet. Anorganische Füllstoffe, wie sie zusätzlich oder alternativ im erfindungsgemäßen Formteil eingesetzt werden, sind vorzugsweise nichtbrennbare Substanzen, durch deren Zugabe ein Verdünnungseffekt erhalten wird, welcher in einer Verringerung der Entflammbarkeit sowie der Brandlast resultiert. Es sei darauf hingewiesen, dass nicht jeder anorganische Füllstoff als Flammschutzmittel wirken kann, ein Flammschutzmittel hingegen sehr wohl auch in Form eines festen, anorganischen Füllstoffs einsetzbar ist (z. B. Aluminiumhydroxid und Magnesiumhydoxid).

Das erfindungsgemäße Formteil, wie in den beigefügten Ansprüchen definiert, zeichnet sich insbesondere dadurch aus, dass das Verhältnis der Gesamtmasse des Melamin-Formaldehyd-Kondensats zu der Gesamtmasse der separaten, geschäumten Polystyrol-Partikel größer ist als 2,2. Vorzugsweise ist das Verhältnis der Gesamtmasse des Melamin-Formaldehyd-Kondensats zu der Gesamtmasse der separaten, geschäumten Polystyrol-Partikel sogar 2,3 oder größer. Eigene Untersuchungen haben gezeigt, dass die Wahl eines derart hohen Verhältnisses zwischen der Gesamtmasse des Melamin-Formaldehyd-Kondensates und der Gesamtmasse der separaten, geschäumten Polystyrol-Partikel in einer überraschend hohen Flammschutzwirkung des erfindungsgemäßen Formteils resultiert. Der Grund für die erzielte hohe Flammschutzwirkung liegt vermutlich darin begründet, dass durch den Einsatz von mehr als der doppelten Menge von Melamin-Formaldehyd-Kondensat im Vergleich zu geschäumten Polystyrol-Partikeln bei gleichmäßiger Verteilung der geschäumten Polystyrol-Partikel innerhalb des Melamin-Formaldehyd-Kondensates ein brandhemmender bzw. brandmindernder Abstand zwischen den einzelnen Polystyrol-Partikeln resultiert. Bei Einstellung des erfindungsgemäß vorliegenden Massenverhältnisses zwischen Kondensat und Partikeln wird die Menge und Konzentration der leichter brennbaren geschäumten Polystyrol-Partikel verringert und eine Kontaktierung der geschäumten Polystyrol-Partikel miteinander vermieden, wodurch die Entflammung bzw. der Brand eines erfindungsgemäßen Formteils erschwert wird, da sich die geschäumten Polystyrol-Partikel nicht kontaktieren, sondern jeweils voneinander separiert sind.

Trotz der erfindungsgemäß hohen Menge an eingesetztem Melamin-Formaldehyd-Kondensat, liegt die Dichte des erfindungsgemäßen Formteils im Bereich von 19 bis 50 kg/cm³ und damit in einem Bereich, welcher den Einsatz des erfindungsgemäßen Formteils als Isolier- bzw. Dämmmaterial z. B. für Gebäude ermöglicht.

Bevorzugt ist ein erfindungsgemäßes Formteil (vorzugsweise wie vorstehend als bevorzugt bezeichnet), wobei
- die Wärmeleitfähigkeit des Formteils kleiner ist als 34 mW/m K, bevorzugt kleiner ist als 32 mW/m K, besonders bevorzugt gleich oder kleiner ist als 31 mW/m K, jeweils vorzugsweise bestimmt gemäß DIN EN 12667:2001 mit einem Plattengerät (Poensgen) bei 10°C.

Die Wärmeleitfähigkeit ist das Vermögen eines Baustoffes, thermische Energie mittels Wärmeleitung zu transportieren. Entsprechend ist die Wärmeleitung eines Materials umso geringer, das heißt die Wärmedämmung eines Materials umso besser, je geringer der Wert für die Wärmeleitfähigkeit eines Materials ausfällt. Herkömmliche Materialien, die zur Wärmedämmung eingesetzt werden, beispielsweise Mineralwolle und Kunststoffschäume wie EPS (expandiertes Polystyrol) und XPS (extrudiertes Polystyrol), besitzen eine Wärmeleitfähigkeit im Bereich zwischen 30 und 40 mW/m K.

Entsprechende erfindungsgemäße Formteile, deren Wärmeleitfähigkeit kleiner ist als 34 mW/m K, bevorzugt kleiner ist als 32 mW/m K, besonders bevorzugt gleich oder kleiner ist als 31 mW/m K, sind besonders vorteilhaft, weil ihre Wärmeleitfähigkeit und damit die wärmedämmenden Eigenschaften der erfindungsgemäßen Formteile besser oder zumindest vergleichbar mit herkömmlichem Wärmedämmmaterialien ist. Gleichzeitig besitzt das erfindungsgemäße bevorzugte Formteil eine äußerst hohe Flammschutzwirkung, welche weit über jener von herkömmlichen Wärmedämmmaterialien liegt.

In einer bevorzugten Ausgestaltung sind die eingebetteten separaten, geschäumten Polystyrol-Partikel des erfindungsgemäßen Formteils flammschutzmittelhaltig.

Es hat sich in eigenen Untersuchungen herausgestellt, dass die Flammschutzwirkung des erfindungsgemäßen Formteils in besonderem Maße gesteigert ist, wenn den eingebetteten separaten, geschäumten Polystyrol-Partikeln zusätzliches Flammschutzmittel als Additiv zugefügt ist. Durch den Einsatz von flammschutzmittelhaltigen Polystyrol-Partikeln innerhalb des erfindungsgemäßen Formteils wird die flammenhemmende Wirkung des erfindungsgemäßen Formteils gesteigert, bei gleichzeitigem Erhalt der hervorragenden Isoliereigenschaften des erfindungsgemäßen Materials. Besonders bevorzugt werden Polystyrol-Partikel auf Basis von Neopor F 5300 verwendet, welches über ein polymeres Flammschutzmittel in gleichmäßiger Verteilung verfügt. Neopor F 5300 besitzt gemäß technischen Merkblättern ein Brandverhalten entsprechend DIN 4102-B1 (schwerentflammbar) und EN-ISO 13501-1-E bei Einsatz als Dämmstoff und liegt in Form eines (aufschäumbaren) linsenförmigen Granulats vor, wobei die Korngrößenklasse von Neopor F 5300 im Allgemeinen 0,9 bis 1,4 mm beträgt und wobei die übliche Schüttdichte im Bereich von 15 bis 27 kg/m³ liegt.

Vorzugsweise ist die Dichte der eingebetteten separaten, geschäumten Polystyrol-Partikel, bestimmt nach dem Abtrennen der weiteren Bestandteile des Formteils, kleiner als 21 kg/m³. Die hier angegebene Dichte der eingebetteten separaten, geschäumten Polystyrol-Partikel, bestimmt nach dem Abtrennen der weiteren Bestandteile des Formteils, ist als Rohdichte, das heißt als die Dichte des porösen Festkörpers basierend auf dem Volumen einschließlich der Porenräume, zu verstehen. Die Rohdichte ist somit dadurch charakterisiert, dass das Porenvolumen bei der Bestimmung der Rohdichte (z.B. durch pyknometrische Messungen am unzerkleinerten Material) mit berücksichtigt wird. Bei Baustoffen wirkt sich eine niedrige Rohdichte im Allgemeinen positiv auf die Wärmedämmung aus. Der Einsatz von separaten, geschäumten Polystyrol-Partikeln mit einer Rohdichte von kleiner als 21 kg/m³ ist demnach vorteilhaft, da sich eine geringe Rohdichte der eingesetzten geschäumten Polystyrol-Partikel günstig auf die Gesamtdichte des erfindungsgemäßen Formteils auswirkt und dessen Verwendung als Dämmmaterial z. B. für Gebäude besonders bevorzugt erscheinen lässt.

Bevorzugt enthalten die eingebetteten separaten, geschäumten Polystyrol-Partikel des erfindungsgemäßen Formteils athermane Partikel. Als athermane Partikel werden typischerweise Partikel bezeichnet, welche in der Lage sind, Infrarot- bzw. Wärmestrahlung teilweise oder vollständig zu absorbieren. Der Einsatz von athermanen Partikeln ist vorteilhaft, da dadurch die Wärmeleitfähigkeit der eingebetteten separaten, geschäumten Polystyrol-Partikel gesenkt und somit die wärmedämmende Eigenschaft des erfindungsgemäßen Formteils weiter gesteigert wird.

Geeignete athermane Partikel sind Metallpulver, wie Aluminiumpulver, Metalloxide, wie Eisenoxid und Aluminiumoxid, Farbpigmente, sowie insbesondere Kohlenstoffpartikel, wie Rußpartikel und Graphitpartikel. Geeignet sind alle üblichen Rußsorten, wobei Flammruß mit einer Partikelgröße von 80 bis 120 nm bevorzugt ist. Ruß wird vorzugsweise in Mengen von 2 bis 10 Gew.-% eingesetzt. Besonders gut geeignet sind Graphitpartikel, wobei eine mittlere Partikelgröße von 1 bis 50 µm, insbesondere von 2,5 bis 12 µm, ein Schüttgewicht im Bericht von 100 bis 500 g/L und eine spezifische Oberfläche im Bericht von 5 bis 20 m²/g bevorzugt sind. Es kann Naturgraphit oder gemahlener synthetischer Graphit eingesetzt werden. Die Graphitpartikel sind in den eingebetteten separaten, geschäumten Polystyrol-Partikeln typischerweise in Mengen von 0,05 bis 25 Gew.-%, insbesondere von 0,5 bis 8 Gew.-% enthalten.

Ein erfindungsgemäßes Formteil ist bevorzugt (vorzugsweise vorstehend als bevorzugt bezeichnet), wobei der Volumenanteil der separaten geschäumten Polystyrol-Partikel im Formteil im Bereich von 90 bis 99 % liegt, vorzugsweise im Bereich von 95 bis 99 %. Entsprechend bevorzugte Formteile sind besonders vorteilhaft, weil durch hohe Raumfüllung der separaten, geschäumten Polystyrol-Partikel eine hervorragende Isolierwirkung des erfindungsgemäßen Formteils erhalten wird. Das heißt, dass die hervorragenden Dämmeigenschaften des erfindungsgemäßen Formteils maßgeblich durch den Volumenanteil an geschäumten Polystyrol-Partikeln bewirkt werden. Demnach ist es zwar aus Gründen einer hohen Flammschutzwirkung wichtig, eine Separierung der geschäumten Polystyrol-Partikel durch den Einsatz eines hohen Masseanteils an Melamin-Formaldehyd-Kondensats zu erreichen; für gleichzeitig zu erreichende besonders hohe Dämmeigenschaften ist es jedoch vorteilhaft, den Volumenanteil an Matrixkomponente dennoch möglichst gering zu halten. Das bevorzugte erfindungsgemäße Formteil grenzt sich dadurch auch deutlich von üblichen Formteilen aus dem Stand der Technik ab.

Ein erfindungsgemäßes Formteil (vorzugsweise wie vorstehend als bevorzugt bezeichnet) ist bevorzugt, wobei die Druckfestigkeit des Formteils im Bereich von 22-350 kPa liegt, bestimmt gemäß DIN EN 826:2013.

Anhand des Wertes der Druckfestigkeit kann die Widerstandsfähigkeit eines Werkstoffes bei der Einwirkung von Druckkräften quantifiziert und so die Eignung des entsprechenden Werkstoffes als Baumaterial beurteilt werden.

Für den Einsatz als Dämmmaterial ist eine Druckfestigkeit des erfindungsgemäßen Formteils, die im Bereich von 22-350 kPa liegt, besonders vorteilhaft, weil ein entsprechender Druckfestigkeitswert eine genügend hohe Widerstandsfähigkeit des erfindungsgemäßen Formteils für den Einsatz in zum Beispiel der Gebäudedämmung gewährleistet. Vorzugsweise liegt die Biegefestigkeit des erfindungsgemäßen Formteils im Bereich von 22-450 kPa, bestimmt gemäß DIN EN 12089:2013. Die Biegefestigkeit stellt neben der Druckfestigkeit einen weiteren quantitativ angebbaren Festigkeitswert dar.

Eine entsprechend bevorzugte Biegefestigkeit des erfindungsgemäßen Formteils, die im Bereich von 22-450 kPa liegt, ist besonders vorteilhaft, weil das erfindungsgemäße Formteil bei Vorliegen eines derartigen Biegefestigkeitswertes über eine vorteilhafte mechanische Belastbarkeit verfügt, durch welche sich das erfindungsgemäße Formteil besonders für den Einsatz als Dämmmaterial, zum Beispiel bei der Dämmung von Gebäuden, eignet. Bevorzugt ist ein erfindungsgemäßes Formteil (vorzugsweise wie vorstehend als bevorzugt bezeichnet), wobei das Formteil die Form einer Platte oder eines Blocks besitzt.

Unter einer Platte, ist ein relativ dünnes, flaches und ebenes festes Bauteil zu verstehen, das überall gleich dick ist. Diese bevorzugte Form des erfindungsgemäßen Formteils ist insbesondere unter dem Gesichtspunkt der Verwendung des erfindungsgemäßen Formteils als Dämmmaterial für die Isolierung von Gebäuden, bzw. Gebäudewänden besonders vorteilhaft.

Unter einem Block ist ein ebenes und festes Bauteil zu verstehen, welches zumindest annähernd quaderförmig und im Vergleich zur vorstehend definierten Platte dicker ist. Die Verwendung eines erfindungsgemäßen Formteils in Form eines Blocks ist bei bestimmten Anforderungen an die Isolierwirkung, zum Beispiel zum Erreichen einer besonders hohen Wärmedämmung, besonders vorteilhaft.

Eine Vielzahl der vorstehend beschriebenen Aufgaben wird gelöst durch eine Mischung zur Herstellung eines erfindungsgemäßen Formteils, umfassend (abhängig von den Erfordernissen des Einzelfalls)
- 33 bis 65 Gew.-% Melamin-Formaldehyd-Vorkondensat, bezogen auf die Gesamtmenge der Mischung (zum Vorkondensat siehe die vorstehenden Ausführungen betreffend das erfindungsgemäße Formteil, die hier entsprechend gelten),
   oder
   25 bis weniger als 33 Gew.-% Melamin-Formaldehyd-Vorkondensat, vorzugsweise 25 bis 31 Gew.-%, bezogen auf die Gesamtmenge der Mischung,
- 1 bis 3,5 Gew.-% einer organischen Säure ausgewählt aus der Gruppe bestehend aus Ameisensäure, Zitronensäure und deren Mischungen, vorzugsweise 1,5 bis 2,8 Gew.-%, bezogen auf die Gesamtmenge der Mischung,
   oder
   0,2 bis weniger als 1 Gew.-% einer organischen Säure ausgewählt aus der Gruppe bestehend aus Ameisensäure, Zitronensäure und deren Mischungen, vorzugsweise 0,2 bis 0,5 Gew.-%, bezogen auf die Gesamtmenge der Mischung,
- 6 bis 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise 8 bis 10 Gew.-%, bezogen auf die Gesamtmenge der Mischung (zu den Füllstoffen und Flammschutzmitteln siehe die vorstehenden Ausführungen betreffend das erfindungsgemäße Formteil, die hier entsprechend gelten),
   oder
   mehr als 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise mehr als 12 bis 35 Gew.-%, besonders vorzugsweise mehr als 12 bis 30 Gew.-%, ganz besonders vorzugsweise mehr als 12 bis 25 Gew.-%, am bevorzugtesten mehr als 12 bis 22 Gew.-%, bezogen auf die Gesamtmenge der Mischung,
   wobei jeweils vorzugsweise (also unabhängig von der Gesamtmenge eingesetzter (i) anorganischer Füllstoffe und (ii) Flammschutzmittel) 50 Gew.-% oder mehr der Gesamtmenge des einen oder der mehreren festen Additive Flammschutzmittel sind (der Einsatz von Flammschutzmitteln ist also gegenüber dem Einsatz von anorganischen Füllstoffen bevorzugt),
- 25 bis 35 Gew.-% vorgeschäumte Polystyrol-Partikel, vorzugsweise 27 bis 33 Gew.-%, bezogen auf die Gesamtmenge der Mischung, mit einem Pentan-Gehalt von bis zu 4 Gew.-%, bevorzugt im Bereich von 0,1 bis 4 Gew.-%, vorzugsweise 0,1 bis 0,4 Gew.-% oder 2 bis 4 Gew.-% (zu den Polystyrol-Partikeln siehe die vorstehenden Ausführungen betreffend das erfindungsgemäße Formteil, die hier entsprechend gelten ),
- bis zu 30 Gew.-% insgesamt an inerten Flüssigkeiten ausgewählt aus der Gruppe bestehend aus Wasser und anderen inerten Flüssigkeiten, vorzugsweise bis zu 30 Gew.-% Wasser, bezogen auf die Gesamtmenge der Mischung.

Eine erfindungsgemäße Mischung umfasst (abhängig von den Erfordernissen des Einzelfalls) 33 bis 65 Gew.-% oder 25 bis weniger als 33 Gew.-% Melamin-Formaldehyd-Vorkondensat, vorzugsweise 25 bis 31 Gew.-%, bezogen auf die Gesamtmenge der Mischung. Bezüglich der Definition eines Melamin-Formaldehyd-Vorkondensates sowie der Vorteile, welche mit dem Einsatz von 33 bis 65 Gew.-% oder 25 bis weniger als 33 Gew.-% Melamin-Formaldehyd-Vorkondensat in der erfindungsgemäßen Mischung einhergehen, sei auf die vorstehende Diskussion zu Melamin-Formaldehyd-Vorkondensaten sowie auf die Diskussion zum Verhältnis der Gesamtmasse des Melamin-Formaldehyd-Kondensats zu der Gesamtmasse der separaten, geschäumten Polystyrol-Partikel im erfindungsgemäßen Formteil hingewiesen, die hier sinngemäß zutreffen, mit den notwendigen Anpassungen und Beschränkungen. Hierzu sei noch einmal erwähnt, dass Melamin-Formaldehyd-Vorkondensat ein Vorprodukt des im erfindungsgemäßen Formteil enthaltenen Melamin-Formaldehyd-Kondensats ist. Besonders bevorzugt werden für den Einsatz in der erfindungsgemäßen Mischung kommerziell erhältliche Melamin-Formaldehyd-Vorkondensate mit der allgemeinen Markenbezeichnung Kauramin verwendet.

Eine erfindungsgemäße Mischung umfasst (abhängig von den Erfordernissen des Einzelfalls) 1 bis 3,5 Gew.-% oder 0,2 bis weniger als 1 Gew.-% einer organischen Säure, ausgewählt aus der Gruppe bestehend aus Ameisensäure, Zitronensäure und deren Mischungen, vorzugsweise 1,5 bis 2,8 Gew.-% oder 0,2 bis 0,5 Gew.-%, bezogen auf die Gesamtmenge der Mischung. Die organische Säure dient innerhalb der erfindungsgemäßen Mischung als Härter, durch welchen das ebenfalls in der erfindungsgemäßen Mischung enthaltene Melamin-Formaldehyd-Vorkondensat bei gleichzeitiger Temperatureinwirkung zu Melamin-Formaldehyd-Kondensat aushärtet. Hieraus resultiert dann ein Formteil, vorzugsweise ein erfindungsgemäßes Formteil.

Eine erfindungsgemäße Mischung umfasst 6 bis 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise 8 bis 10 Gew.-% bezogen auf die Gesamtmenge der Mischung. Bezüglich der Erläuterung der in einer erfindungsgemäßen Mischung einsetzbaren Additive und deren Vorteile sei auf die vorstehende Diskussion zu den Additiven im erfindungsgemäßen Formteil verwiesen, die hier entsprechend zutrifft.

Alternativ (abhängig von den Erfordernissen des Einzelfalls) umfasst eine erfindungsgemäße Mischung mehr als 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise mehr als 12 bis 35 Gew.-%, besonders vorzugsweise mehr als 12 bis 30 Gew.-%, ganz besonders vorzugsweise mehr als 12 bis 25 Gew.-%, am bevorzugtesten mehr als 12 bis 22 Gew.-%, bezogen auf die Gesamtmenge der Mischung, Hierbei sind jeweils vorzugsweise 50 Gew.-% oder mehr der Gesamtmenge des einen oder der mehreren festen Additive Flammschutzmittel. Eine Erhöhung der Menge an einem oder mehreren festen Additiven ausgewählt aus der Gruppe bestehend aus (i) anorganischen Füllstoffen und (ii) Flammschutzmitteln innerhalb der Mischung führt zu einer vorteilhaften Steigerung der Flammschutzwirkung des aus der Mischung resultierenden Formteils. Bei Einsatz hoher Mengen an festen Additiven ausgewählt aus der Gruppe bestehend aus (i) anorganischen Füllstoffen und (ii) Flammschutzmitteln (d.h. bei Einsatz von mehr als 12 Gew.-%, bezogen auf die Gesamtmenge der Mischung) ist es besonders vorteilhaft, wenn mindestens 50 Gew.-% der Gesamtmenge der festen Additive Flammschutzmittel sind. Durch den (zumindest teilweisen) Verzicht auf anorganische Füllstoffe wird gewährleistet, dass die aus entsprechenden erfindungsgemäßen Mischungen resultierenden Formteile (trotz des hohen Gehalts an einem oder mehreren festen Additiven) eine vorteilhaft niedrige Dichte und gleichzeitig einen hervorragenden Flammschutz besitzen.

Eine erfindungsgemäße Mischung umfasst zudem 25 bis 35 Gew.-% vorgeschäumte Polystyrol-Partikel, vorzugsweise 27 bis 33 Gew.-%, bezogen auf die Gesamtmenge der Mischung, mit einem Pentan-Gehalt von bis zu 4 Gew.-%. Pentan muss in den Partikeln nicht vorhanden sein, bevorzugt liegt der Pentan-Gehalt aber im Bereich von 0,1 bis 4 Gew.-%, vorzugsweise 0,1 bis 0,4 Gew.-% oder 2 bis 4 Gew.-%. Die in einer erfindungsgemäßen Mischung enthaltenen vorgeschäumten Polystyrol-Partikel sind von dem im erfindungsgemäßen Formteil enthaltenen geschäumten Polystyrol-Partikeln zu unterscheiden. Vorgeschäumte Polystyrol-Partikel sind Polystyrol-Partikel, deren Expansionsvermögen in einer ersten Aufschäumung nicht vollständig ausgeschöpft wurde. Das ursprüngliche Expansionsvermögen eines noch nicht aufgeschäumten Polystyrol-Partikels hängt maßgeblich von der Menge an Treibmittel (wie zum Beispiel Pentan) ab, welches der noch nicht aufgeschäumte, ursprüngliche Polystyrol-Partikel enthält. Ein vorgeschäumter Polystyrol-Partikel ist ein teilweise aufgeschäumter Polystyrol-Partikel, welcher unmittelbar nach der ersten (und nur teilweisen) Aufschäumung bzw. Expansion noch eine Menge an Treibmittel enthält, welche ihm eine weitere Expansion in einem zweiten, unmittelbar nach dem ersten stattfindenden Aufschäumungsschritt ermöglichen würde. Dies bedeutet, dass ein vorgeschäumter Polystyrol-Partikel, wie vorstehend beschrieben, sein ursprüngliches Expansionsvermögen während der ersten Aufschäumung nicht vollständig ausgeschöpft hat. Durch die stetige Verdunstung von restlichem, noch enthaltenem Treibmittel verliert ein vorgeschäumter Polystyrol-Partikel nach seiner Herstellung, das heißt nach der ersten, nur teilweisen Aufschäumung, allerdings allmählich sein ursprünglich noch vorhandenes restliches Expansionsvermögen, sodass nach längerer Lagerungszeit vorgeschäumte Polystyrol-Partikel resultieren können, welche über keine bzw. nur noch einen geringen Gehalt an Treibmittel verfügen, so dass diese nicht mehr dazu in der Lage sind weiter zu expandieren.

Besonders bevorzugt werden für erfindungsgemäße Mischungen vorgeschäumte Polystyrol-Partikel eingesetzt, in denen Pentan, vorzugsweise n-Pentan, als Treibmittel enthalten ist. Der Pentan-Gehalt der vorgeschäumten Polystyrol-Partikel liegt bevorzugt im Bereich von 0,1 bis 4 Gew.-%, kann jedoch auch niedriger sein. Je nach Art des Herstellungsverfahrens, welches zur Herstellung eines Formteils aus der erfindungsgemäßen Mischung verwendet werden soll, ist entweder ein niedrigerer Pentan-Gehalt von nicht mehr als 0,4 Gew.-%, vorzugsweise im Bereich von 0,1 bis 0,4 Gew.-%, oder ein höherer Pentan-Gehalt von vorzugsweise 2 bis 4 Gew.-%, innerhalb der einzusetzenden, vorgeschäumten Polystyrol-Partikel, besonders bevorzugt. Ein Pentan-Gehalt im Bereich von 0 bis 0,4 Gew.-% bedeutet in diesem Zusammenhang, dass die vorgeschäumten Polystyrol-Partikel ihr Expansionsvermögen ganz oder zumindest nahezu vollständig, verloren haben. Ein Pentan-Gehalt im Bereich von 2 bis 4 Gew.-% bedeutet hingegen, dass die vorgeschäumten Polystyrol-Partikel in jedem Fall noch über ein relevantes Expansionsvermögen verfügen. Die unterschiedlichen Herstellungsverfahren, welche unterschiedliche bevorzugte Pentan-Gehalte der eingesetzten vorgeschäumten Polystyrol-Partikel bedingen, werden unten noch genauer beschrieben.

Eine erfindungsgemäße Mischung umfasst bis zu 30 Gew.-% insgesamt an inerten Flüssigkeiten ausgewählt aus der Gruppe bestehend aus Wasser und anderen inerten Flüssigkeiten, vorzugsweise bis zu 30 Gew.-% Wasser, bezogen auf die Gesamtmenge der Mischung. In einer bevorzugten Ausgestaltung sind inerte Flüssigkeiten wie etwa Wasser (zum Beispiel in Funktion als Lösungs- und/oder Dispergiermittel) anwesend. Der Begriff "inerte Flüssigkeiten" bedeutet in diesem Zusammenhang, dass die entsprechenden, vorzugsweise in der erfindungsgemäßen Mischung enthaltenen Flüssigkeiten, gegenüber dem ebenfalls in der erfindungsgemäßen Mischung enthaltenen Melamin-Formaldehyd-Vorkondensat inert sind, das heißt nicht mit dem Melamin-Formaldehyd-Vorkondensat reagieren.

In einer weiteren bevorzugten Ausgestaltung der erfindungsgemäßen Mischung sind inerte Flüssigkeiten nicht anwesend.

Bevorzugt ist eine erfindungsgemäße Mischung zur Herstellung eines erfindungsgemäßen Formteils (vorzugsweise wie vorstehend als bevorzugt bezeichnet), umfassend
- 33 bis 37 Gew.-% Melamin-Formaldehyd-Vorkondensat, bezogen auf die Gesamtmenge der Mischung,
   oder (abhängig von den Erfordernissen des Einzelfalls)
   25 bis weniger als 33 Gew.-% Melamin-Formaldehyd-Vorkondensat, vorzugsweise 25 bis 31 Gew.-%, bezogen auf die Gesamtmenge der Mischung,
- 1 bis 3 Gew.-% Ameisensäure, vorzugsweise 1,5 bis 2,5 Gew.-%, bezogen auf die Gesamtmenge der Mischung,
   oder (abhängig von den Erfordernissen des Einzelfalls)
   0,2 bis weniger als 1 Gew.-% Ameisensäure, vorzugsweise 0,2 bis 0,5 Gew.-%, bezogen auf die Gesamtmenge der Mischung,
- 6 bis 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise 8 bis 10 Gew.-%, bezogen auf die Gesamtmenge der Mischung,
   oder (abhängig von den Erfordernissen des Einzelfalls)
   mehr als 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise mehr als 12 bis 35 Gew.-%, besonders vorzugsweise mehr als 12 bis 30 Gew.-%, ganz besonders vorzugsweise mehr als 12 bis 25 Gew.-%, am bevorzugtesten mehr als 12 bis 22 Gew.-%, bezogen auf die Gesamtmenge der Mischung,
   wobei jeweils vorzugsweise (also unabhängig von der Gesamtmenge eingesetzter (i) anorganischer Füllstoffe und (ii) Flammschutzmittel) 50 Gew.-% oder mehr der Gesamtmenge des einen oder der mehreren festen Additive Flammschutzmittel sind,
- 25 bis 35 Gew.-% vorgeschäumte Polystyrol-Partikel, vorzugsweise 27 bis 33 Gew.-%, bezogen auf die Gesamtmenge der Mischung, mit einem Pentan-Gehalt von bis zu 4 Gew.-%, bevorzugt im Bereich von 0,1 bis 4 Gew.-%, vorzugsweise 0,1 bis 0,4 Gew.-% oder 2 bis 4 Gew.-%,
- 20 bis 30 Gew.-% insgesamt an inerten Flüssigkeiten ausgewählt aus der Gruppe bestehend aus Wasser und anderen inerten Flüssigkeiten, vorzugsweise 20 bis 30 Gew.-% Wasser, bezogen auf die Gesamtmenge der Mischung.

Entsprechend bevorzugte Mischungen sind wässrige Mischungen. In eigenen Untersuchungen wurde herausgefunden, dass aus erfindungsgemäßen Mischungen, welche in wässriger Form (als Dispersion) vorliegen, erfindungsgemäße Formteile resultieren, welche im Vergleich zu anderen erfindungsgemäßen Formteilen eine etwas erhöhte Flammschutzwirkung zeigen.

Besonders bevorzugt wird für eine erfindungsgemäße Mischung (wie vorstehend in den Ansprüchen definiert), welche in wässriger Form vorliegt, das kommerziell erhältliche Kauramin Impregnating Resin 791 Liquid als Melamin-Formaldehyd-Vorkondensat verwendet. Bei Kauramin Impregnating Resin 791 Liquid handelt es sich um eine wässrige Lösung eines modifizierten Melamin-Formaldehyd-Vorkondensates, welches einen Trockenanteil von 59 bis 61 Gew.-% sowie bei 20° C eine Dichte im Bereich von 1,25 bis 1,26 g/cm³ besitzt.

Ebenfalls bevorzugt ist eine erfindungsgemäße Mischung zur Herstellung eines erfindungsgemäßen Formteils (vorzugsweise wie vorstehend als bevorzugt bezeichnet), umfassend
- 55 bis 65 Gew.-% pulverförmiges Melamin-Formaldehyd-Vorkondensat, bezogen auf die Gesamtmenge der Mischung,
- 1 bis 3,5 Gew.-% Zitronensäure, vorzugsweise 1,5 bis 2,8 Gew.-%, bezogen auf die Gesamtmenge der Mischung (als Härter, vorzugsweise in Form eines Pulvers),
- 6 bis 12 Gew.-% einer Gesamtmenge von einem oder mehreren festen Additiven ausgewählt aus der Gruppe bestehend aus (ii) anorganischen Füllstoffen und (ii) Flammschutzmitteln, vorzugsweise 8 bis 10 Gew.-%, bezogen auf die Gesamtmenge der Mischung,
- 25 bis 35 Gew.-% vorgeschäumte Polystyrol-Partikel, vorzugsweise 27 bis 33 Gew.-%, bezogen auf die Gesamtmenge der Mischung, mit einem Pentan-Gehalt von bis zu 4 Gew.-%, bevorzugt im Bereich von 0,1 bis 4 Gew.-%, vorzugsweise 0,1 bis 0,4 Gew.-% oder 2 bis 4 Gew.-%,
wobei die Mischung rieselfähig ist.

In einer solchen bevorzugten Mischung wird vollständig oder zumindest weitgehend auf flüssige Anteile verzichtet, um die Rieselfähigkeit zu gewährleisten.

In der bevorzugten erfindungsgemäßen Mischung wie vorstehend definiert werden sowohl für das Melamin-Formaldehyd-Vorkondensat als auch als Härter vorteilhafterweise Feststoffe (pulverförmiges Vorkondensat; Zitronensäure) verwendet. Entsprechend bevorzugte Mischungen haben sich in der Handhabung sowie bei der Herstellung eines erfindungsgemäßen Formteiles als besonders vorteilhaft erwiesen.

Besonders bevorzugt wird als pulverförmiges Melamin-Formaldehyd-Vorkondensat das kommerziell erhältliche Kauramin Impregnating Resin 773 Powder verwendet. Der Feuchtigkeitsgehalt ist vorzugsweise kleiner als 2,0 Gew.-%. Bei Kauramin Impregnating Resin 773 Powder handelt es sich um ein modifiziertes Melamin-Formaldehyd-Vorkondensat, welches als weißes Pulver vorliegt.

Bevorzugt ist zudem eine erfindungsgemäße Mischung (vorzugsweise wie vorstehend als bevorzugt bezeichnet), wobei die vorgeschäumten Polystyrol-Partikel eine Schüttdichte im Bereich von 7 bis 20 kg/m³ besitzen, vorzugsweise 7 bis 15 kg/m³.

Der Einsatz solcher vorgeschäumten Polystyrol-Partikeln mit einer Schüttdichte im Bereich von 7 bis 20 kg/m³, vorzugsweise im Bereich von 7 bis 15 kg/m³ in der erfindungsgemäßen Mischung ist vorteilhaft, da sich dies günstig auf die spätere Gesamtdichte des aus der erfindungsgemäßen Mischung herzustellenden erfindungsgemäßen Formteils auswirkt, und dessen Verwendung als Dämmmaterial zum Beispiel für Gebäude besonders bevorzugt erscheinen lässt.

Bevorzugt ist eine erfindungsgemäße Mischung (vorzugsweise wie vorstehend als bevorzugt bezeichnet), wobei die vorgeschäumten Polystyrol-Partikel flammschutzhaltig sind, d.h. ein Flammschutzmittel enthalten. Vorzugsweise ist dabei das in den flammschutzhaltigen vorgeschäumten Polystyrol-Partikeln enthaltene Flammschutzmittel ausgewählt aus der Gruppe bestehend aus
- bromierte Polymere, vorzugsweise bromiertes Styrol-Butadien-Copolymer,
- anorganische Flammschutzmittel.

Wie vorstehend bereits ausgeführt, hat sich in eigenen Untersuchungen gezeigt, dass die Flammschutzwirkung des aus der erfindungsgemäßen Mischung herzustellenden erfindungsgemäßen Formteils weiter erhöht werden kann, indem den Polystyrol-Partikeln ebenfalls ein Flammschutzmittel zugesetzt wird, ohne dass dabei das erfindungsgemäße Formteil seine Eignung als Dämmmaterial verliert. Bei der Wahl eines geeigneten Flammschutzmittels galt es dabei besondere Hürden zu überwinden, da der Einsatz des früher typischerweise in Polystyrol-Schäumen verwendeten additiven Flammschutzmittels Hexabromcyclododecan mittlerweile nicht mehr erwünscht ist. Als geeignete Alternative zu dem Flammschutzmittel Hexabromcyclododecan haben sich bromierte Polymere und insbesondere bromiertes Styrol-Butadien-Copolymer herausgestellt.

Bromiertes Styrol-Butadien-Copolymer ist ein Styrol-Butadien-Kautschuk, welcher durch nachträgliche Bromierung der verbleibenden Doppelbindung am Butadien flammenhemmende Eigenschaften aufweist. Zudem weist Styrol-Butadien-Copolymer gute Mischbarkeit mit Polystyrol auf und erlaubt die Herstellung von stabilen Schäumen. Als stabiles, nahezu wasserunlösliches Polymer weist bromiertes Styrol-Butadien-Copolymer keine akute Toxizität auf und ist beständig gegenüber chemisch-physikalischem und biologischem Abbau.

In eigenen Untersuchungen hat sich zudem gezeigt, dass sich als Ersatz für Hexabromcyclododecan ebenfalls der Einsatz von anorganischen Flammschutzmitteln, vorzugsweise mineralischen Flammschutzmitteln, in den vorgeschäumten Polystyrol-Partikeln eignet. Der Flammschutzmechanismus von anorganischen Flammschutzmitteln, vorzugsweise mineralischen Flammschutzmitteln, beruht in manchen Fällen auf der Abgabe von Wasser, das die Flammenzone kühlt und verdünnt.

Bevorzugt ist auch eine erfindungsgemäße Mischung (vorzugsweise wie vorstehend als bevorzugt bezeichnet), vorzugsweise umfassend als weiteren Bestandteil (zusätzlich zu den vorstehend bereits definierten Bestandteilen einer erfindungsgemäßen Mischung) einen oder mehrere anorganische, mineralische Füllstoffe, vorzugsweise ausgewählt aus der Gruppe bestehend aus Talkum und Gips. Solche bevorzugten anorganischen, mineralischen Füllstoffe sind besonders vorteilhaft, weil sie sich durch eine gute Verarbeitbarkeit sowie ihre ökologische Nachhaltigkeit auszeichnen. Bezüglich der Definition und Funktionsweise von anorganischen, mineralischen Füllstoffen sei auf die vorstehenden diesbezüglichen Ausführungen verwiesen. Bevorzugt wird in der Praxis REA-Gips, das heißt Gips, der aus den Abgasen von Rauchgasentschwefelungsanlagen (Abk. "REA") gewonnen wird.

Vorzugsweise umfasst eine erfindungsgemäße Mischung als weiteren Bestandteil (zusätzlich zu den vorstehend bereits definierten Bestandteilen einer erfindungsgemäßen Mischung), d.h. nicht als Bestandteil der vorgeschäumten Polystyrol-Partikel, ein oder mehrere Flammschutzmittel ausgewählt aus der Gruppe bestehend aus Aluminiumsulfathexadecahydrat, Aluminiumhydroxid, Zinkborat und Blähgraphit.

Aluminiumhydroxid ist das weltweit am meisten eingesetzte Flammschutzmittel. Es wirkt, durch Abspaltung von Wasser, kühlend und gasverdünnend.

Aluminiumsulfathexadecahydrat wirkt ebenfalls durch Abspaltung von Wasser kühlend und gasverdünnend.

Zinkborat enthält üblicherweise Kristallwasser; in dieser Form eingesetzt wirkt es ebenfalls durch Wasserabgabe des Borates kühlend und gasverdünnend. Es bildet zudem schützende Schmelzschichten.

Weiterhin bevorzugt als Flammschutzmittel in der erfindungsgemäßen Mischung ist Blähgraphit. Aufgrund seiner Schichtgitterstruktur ist Graphit in der Lage, spezielle Formen von Einlagerungsverbindungen zu bilden. In diesen sogenannten Zwischengitterverbindungen sind Fremdatome oder -moleküle in zum Teil stöchiometrischen Verhältnissen in die Räume zwischen den Kohlenstoffatomen aufgenommen worden. Solche Graphitverbindungen, zum Beispiel mit Schwefelsäure als Fremdmolekül, die auch im technischen Maßstab hergestellt werden, werden als Blähgraphit bezeichnet. Blähgraphit ist intumeszierbar. Die Dichte von Blähgraphit liegt vorzugsweise im Bereich von 1,5 bis 2,1 g/cm³, die Teilchengröße vorzugsweise im Bereich von 100 bis 1000 µm.

Unter Hitzewirkung werden die Schichten des Blähgraphits durch Thermolyse zieharmonikaartig auseinandergetrieben, die Graphitflocken expandieren. Je nach Blähgraphitsorte kann die Expansion bereits bei ca. 150° C einsetzen und nahezu schlagartig erfolgen. Bei freier Expansion kann das Endvolumen das Mehrhundertfache des Ausgangsvolumens erreichen. Der expandierte Blähgraphit bildet im Brandfall eine Intumeszenzschicht auf der Oberfläche und verlangsamt damit die Brandausweitung.

Die genannten bevorzugten Flammschutzmittel werden häufig alleine eingesetzt, können aber auch kombiniert werden. In manchen Fällen ist es vorteilhaft eine Mischung aus einem oder mehreren der genannten Flammschutzmittel einzusetzen.

Bevorzugt ist zudem eine erfindungsgemäße Mischung (vorzugsweise wie vorstehend als bevorzugt bezeichnet), wobei
flammschutzmittelhaltige vorgeschäumte Polystyrol-Partikel eingesetzt werden, wobei das in diesen flammschutzmittelhaltigen vorgeschäumten Polystyrol-Partikeln enthaltene Flammschutzmittel ausgewählt ist aus der Gruppe bestehend aus
   - bromierte Polymere (siehe oben), vorzugsweise bromiertes Styrol-Butadien-Copolymer,
   - anorganische Flammschutzmittel (siehe oben),
und wobei zudem
die Mischung als weiteren Bestandteil
   einen oder mehrere anorganische, mineralische Füllstoffe, vorzugsweise ausgewählt aus der Gruppe bestehend aus Talkum und Gips (siehe jeweils oben)
      und/oder
   ein oder mehrere Flammschutzmittel ausgewählt aus der Gruppe bestehend aus Aluminiumsulfathexadecahydrat, Aluminiumhydroxid, Zinkborat und Blähgraphit (siehe jeweils oben)
umfasst.

Eine solche erfindungsgemäße bevorzugte Mischung vereinigt die vorstehend diskutierten Vorteile und ist somit insbesondere für die Herstellung eines erfindungsgemäßen Formteils geeignet, welches über eine besonders hohe Flammschutzwirkung verfügt und bezüglich der Dichte und der mechanischen Belastbarkeit für den Einsatz als Dämmmaterial zum Beispiel für Gebäude geeignet ist.

Eine Vielzahl der vorstehend beschriebenen Aufgaben wird ebenfalls gelöst durch ein Verfahren zur Herstellung eines Formteils, vorzugsweise eines erfindungsgemäßen Formteils, mit folgenden Schritten:
- Herstellen oder Bereitstellen einer erfindungsgemäßen Mischung (wie vorstehend und/oder in den Ansprüchen definiert, vorzugsweise wie vorstehend als bevorzugt bezeichnet),
- Einbringen der hergestellten oder bereitgestellten Mischung in ein formgebendes Werkzeug (im Werkzeug wird beim oder nach dem Einbringen der Mischung die Form gegeben, die das herzustellende Formteil erhalten soll),
- Härten des in der Mischung enthaltenen Melamin-Formaldehyd-Vorkondensats, so dass das Formteil gebildet wird.

Die Herstellung eines Formteils, vorzugsweise eines erfindungsgemäßen Formteils kann nach verschiedenen Verfahren erfolgen. Sämtlichen Verfahren ist gemein, dass die hergestellte oder bereitgestellte erfindungsgemäße Mischung zunächst in ein formgebendes Werkzeug eingebracht wird. Durch das formgebende Werkzeug wird die Form des herzustellenden Formteils vorgegeben. Nach dem Einbringen der hergestellten oder bereitgestellten erfindungsgemäßen Mischung in das formgebende Werkzeug und gegebenenfalls einem davon getrennten Schritt des Formens wird durch temperaturinduziertes Härten des in der Mischung enthaltenen Melamin-Formaldehyd-Vorkondensates das erfindungsgemäße Formteil gebildet. Beim Härten reagiert das Melamin-Formaldehyd-Vorkondensat (wie in der erfindungsgemäßen Mischung enthalten) zum Melamin-Formaldehyd-Kondensat (wie im erfindungsgemäßen Formteil enthalten).

Bevorzugt ist ein erfindungsgemäßes Verfahren, wobei die in der Mischung enthaltenen vorgeschäumten Polystyrol-Partikel im formgebenden Werkzeug vor und/oder während des Härtens des Melamin-Formaldehyd-Vorkondensats weiter aufgeschäumt werden, so dass ihre Dichte reduziert wird.

Eine Bedingung für diese bevorzugte Ausführungsform ist, dass die dafür eingesetzten vorgeschäumten Polystyrol-Partikel noch über ein restliches Expansionsvermögen verfügen, das bedeutet, noch eine genügend große Menge an Treibmittel Pentan enthalten, vorzugsweise einen Pentan-Gehalt im Bereich von 2 bis 4 Gew.-% enthalten, der es den vorgeschäumten Polystyrol-Partikeln ermöglicht, während der Herstellung des erfindungsgemäßen Formteils weiter aufzuschäumen bzw. weiter zu expandieren. In dieser bevorzugten Ausgestaltung wird die erfindungsgemäße Mischung im formgebenden Werkzeug erhitzt, vorzugsweise durch die Bedampfung mit Wasserdampf oder die Zuführung von heißer Luft, wobei das restliche in den vorgeschäumten Polystyrol-Partikeln enthaltene Pentan verdampft bzw. sich in der Gasphase ausdehnt, so dass die Polystyrol-Partikel weiter aufschäumen bzw. expandieren. Durch die weitere Expansion der Polystyrol-Partikel wird ein Innendruck im formgebenden Werkzeug erzeugt, welcher während des Aushärtens des Melamin-Formaldehyd-Vorkondensates zum Melamin-Formaldehyd-Kondensat die Bildung eines kompakten erfindungsgemäßen Formteils gewährleistet.

In einem weiteren bevorzugten erfindungsgemäßen Verfahren werden die in der Mischung enthaltenen vorgeschäumten Polystyrol-Partikel im formgebenden Werkzeug vor und/oder während des Härtens des Melamin-Formaldehyd-Vorkondensats komprimiert, so dass ihre Dichte erhöht wird.

Die Komprimierung erfolgt dabei bevorzugt durch die Ausübung eines äußeren Druckes, welcher bewirkt, dass die Polystyrol-Partikel komprimiert werden und so während des Aushärtens des Melamin-Formaldehyd-Vorkondensates ein kompaktes erfindungsgemäßes Formteil resultiert. Da in dieser bevorzugten Ausgestaltung des erfindungsgemäßen Verfahrens der notwendige Druck bzw. die notwendige Komprimierung der Mischung durch äußere Krafteinwirkung erfolgt, ist in diesem Fall der Einsatz von vorgeschäumten Polystyrol-Partikeln mit einem restlichen Expansionsvermögen nicht erforderlich. Vorzugsweise werden für diese bevorzugte Ausgestaltung des Herstellungsverfahrens vorgeschäumte Polystyrol-Partikel mit einem Pentan-Gehalt von nicht mehr als 0,4 Gew.-%, vorzugsweise im Bereich von 0,1 bis 0,4 Gew.-% verwendet. Vorgeschäumte Polystyrol-Partikel mit einem höheren Pentan-Gehalt sind jedoch ebenfalls geeignet.

Bevorzugt ist zudem ein erfindungsgemäßes Verfahren, wobei das formgebende Werkzeug ein Partikelschaumwerkzeug mit bedüsten Werkzeugwänden und einer Füllvorrichtung zum Einfüllen von vorgeschäumten Polystyrol-Partikeln in das Werkzeug ist, wobei vorzugsweise die in der Mischung enthaltenen vorgeschäumten Polystyrol-Partikel im formgebenden Werkzeug vor und/oder während des Härtens des Melamin-Formaldehyd-Vorkondensats weiter aufgeschäumt werden, so dass ihre Dichte reduziert wird.

Die genannten Partikelschaumwerkzeuge besitzen bedüste Werkzeugwände, die vorzugsweise während der Befüllung ein Entweichen der Füllluft aus der Werkzeugkavität und beim Bedampfen die Durchströmung mit Dampf ermöglichen. Wie vorstehend bereits ausgeführt wird in der erfindungsgemäßen Mischung in dieser bevorzugten Ausgestaltung zur Herstellung eines erfindungsgemäßen Formteils Wasserdampf oder erhitzte Luft zur Temperierung zugeführt, wobei vorzugsweise eine Expansion der vorgeschäumten Polystyrol-Partikel erfolgt, wodurch ein Innendruck im Partikelschaumwerkzeug erzeugt wird, und wobei gleichzeitig bzw. im Anschluss eine Aushärtung des Melamin-Formaldehyd-Vorkondensates zum Melamin-Formaldehyd-Kondensat stattfindet.

In einer weiteren bevorzugten Ausgestaltung ist das Partikelschaumwerkzeug mit bedüsten Werkzeugwänden dazu eingerichtet, einen äußeren Druck auf die beinhaltete erfindungsgemäße Mischung aufzubringen, sodass eine relevante Expansion von vorgeschäumten Polystyrol-Partikeln während der Herstellung nicht zwangsläufig erforderlich ist und die eingesetzten vorgeschäumten Polystyrol-Partikel nicht zwingend über ein relevantes restliches Expansionsvermögen verfügen müssen. Vorteilhaft ist bei Einsatz solcher Werkzeuge jedoch die Kombination von Expansion der vorgeschäumten Polystyrol-Partikel und Ausüben von äußerem Druck.

In einer weiteren vorzugsweisen Ausgestaltung wird das erfindungsgemäße Formteil durch ein erfindungsgemäßes Verfahren hergestellt, wobei das formgebende Werkzeug ausgewählt ist aus der Gruppe bestehend aus Formwerkzeug mit Presskörpern zum Komprimieren von in das Formwerkzeug eingebrachtem kompressiblen Material, wobei vorzugsweise die in der Mischung enthaltenen vorgeschäumten Polystyrol-Partikel im formgebenden Werkzeug vor und/oder während des Härtens des Melamin-Formaldehyd-Vorkondensats komprimiert werden, so dass ihre Dichte erhöht wird.

Im Laborbetrieb kann als Formwerkzeug mit Presskörpern beispielsweise ein Holzrahmen eingesetzt werden, der mit Schraubzwingen verengt werden kann. Wie bereits vorstehend ausgeführt, wird in dieser bevorzugten Ausgestaltung die Komprimierung bzw. der Druck zum Erhalt eines kompakten erfindungsgemäßen Formteils durch die Beaufschlagung des Formwerkzeugs mit einem äußeren Druck gewährleistet. Zur Herstellung eines erfindungsgemäßen Formteils wird dabei vorzugsweise ein Druck von größer als 0,4 bar verwendet, bezogen auf eine Grundfläche von 200 x 200 mm. In einer diesbezüglichen bevorzugten Ausgestaltung des erfindungsgemäßen Verfahrens werden zudem vorgeschäumte Polystyrol-Partikel eingesetzt, welche vorzugsweise einen Pentan-Gehalt von bis zu 0,4 Gew.-%, vorzugsweise im Bereich von 0,1 bis 0,4 Gew.-% besitzen und somit nicht mehr über ein relevantes restliches Expansionsvermögen verfügen. Vorgeschäumte Polystyrol-Partikel mit einem höheren Pentan-Gehalt sind aber ebenfalls verwendbar.

Vorstehend beschriebene Aufgaben werden ebenfalls gelöst durch die Verwendung eines erfindungsgemäßen Formteils (wie oben und in den Ansprüchen definiert) als Isoliermaterial, vorzugsweise für Gebäude (insbesondere für Gebäudewände). Ein erfindungsgemäßes Formteil eignet sich insbesondere durch seine äußerst hohe Flammschutzwirkung und seine gleichzeitige gute mechanische Belastbarkeit und moderate Dichte für die Verwendung in der Bauindustrie, das heißt beim Bau, der Renovierung und der Reparatur von Gebäuden, beispielsweise für die thermische Isolierung.

Nachfolgend wird die Erfindung anhand von Beispielen näher erläutert.

### Beispiel 1: Herstellung einer erfindungsgemäßen Mischung unter Einsatz eines wässrigen Melamin-Formaldehyd-Vorkondensates:

In einem Behälter aus Polypropylen mit einem Fassungsvolumen von 5 L wurden 80 g des flüssigen Melamin-Formaldehyd-Vorkondensates Kauramin Impregnating Resin 791 Liquid vorgelegt und mit einem handelsüblichen Handrührgerät auf hoher Stufe für die Dauer von 1 min verrührt. Nach der Zugabe von 12 g Talkum wurde für weitere 5 min verrührt, wobei sich die entstehende Mischung weiß färbte. Nach vollständiger Homogenisierung wurden der Mischung 3 g einer 85-gewichtsprozentigen wässrigen Ameisensäurelösung untergerührt.

Die resultierende Mischung (umfassend ungehärtete Bestandteile der Matrixkomponente) wurde im Anschluss mit vorgeschäumten Polystyrol-Partikeln der Marke Neopor F 5300 vermengt, wobei ein Massenverhältnis zwischen dem Melamin-Formaldehyd-Vorkondensat und den Polystyrol-Partikeln von 2,3:1 gewählt wurde.

### Beispiel 2: Herstellung einer erfindungsgemäßen Mischung mit hohem Gehalt an Flammschutzmittel (festem Additiv) unter Einsatz eines wässrigen Melamin-Formaldehvd-Vorkondensates:

In einem Behälter aus Polypropylen mit einem Fassungsvolumen von 5 L wurden 80 g eines flüssigen Melamin-Formaldehyd-Vorkondensates (Kauramin Impregnating Resin 791 Liquid, Handelsprodukt der BASF) vorgelegt und mit einem handelsüblichen Handrührgerät auf hoher Stufe für die Dauer von 1 min verrührt. Nach der Zugabe von 36 g Blähgraphit (Flammschutzmittel als festes Additiv) wurde für weitere 5 min verrührt, wobei sich die entstehende Mischung grau färbte. Nach vollständiger Homogenisierung wurden der Mischung 0,6 g einer 85-gewichtsprozentigen wässrigen Ameisensäurelösung untergerührt.

Die resultierende Mischung (umfassend ungehärtete Bestandteile der Matrixkomponente) wurde im Anschluss mit ca. 39 g vorgeschäumten Polystyrol-Partikeln (Neopor F 5300, Handelsprodukt der BASF) vermengt, das entspricht einem Anteil von ca. 25 Gew.-% an der Gesamtmenge der Mischung.

### Beispiel 3: Herstellung einer erfindungsgemäßen Mischung unter Einsatz eines pulverförmigen Melamin-Formaldehvd-Vorkondensates:

In einem Behälter aus Polypropylen mit einem Fassungsvolumen von 5 L wurden 80 g des trockenen Melamin-Formaldehyd-Vorkondensates Kauramin Impregnating Resin 773 Powder vorgelegt sowie 12 g Talkum zugegeben und für 5 min verrührt. Nach vollständiger Homogenisierung wurden der Mischung 3 g pulverförmige Zitronensäure untergerührt.

Die resultierende Mischung (umfassend ungehärtete Bestandteile der Matrixkomponente) wurde im Anschluss mit vorgeschäumten Polystyrol-Partikeln der Marke Neopor F 5300 vermengt, wobei ein Massenverhältnis zwischen dem Melamin-Formaldehyd-Vorkondensat und den Polystyrol-Partikeln von 2,3:1 gewählt wurde.

### Beispiel 4: Herstellung von erfindungsgemäßen Formteilen im Formwerkzeug mit Presskörpern:

Aus den in den Beispielen 1 bis 3 hergestellten erfindungsgemäßen Mischungen wurden jeweils erfindungsgemäße Formteile hergestellt. Dafür wurden die erfindungsgemäßen Mischungen jeweils in eine hölzerne Rahmenkonstruktion gegeben, welche als Formwerkzeug diente. Danach wurden die hölzernen Rahmenkonstruktionen jeweils mit Schraubzwingen, welche als Presskörper dienten, verdichtet, sodass in allen drei Fällen eine Volumenreduktion von etwa 50% resultierte. Die befüllten und verdichteten hölzernen Rahmenkonstruktionen wurden im Anschluss für jeweils 1 h bei 80 °C im Trockenschrank temperiert, wobei das in den erfindungsgemäßen Mischungen enthaltene Melamin-Formaldehyd-Vorkondensat zum Melamin-Formaldehyd-Kondensat aushärtete.

Die so hergestellten erfindungsgemäßen Formteile bestanden jeweils den Einzelflammentest nach DIN EN ISO 11925-2:2010.

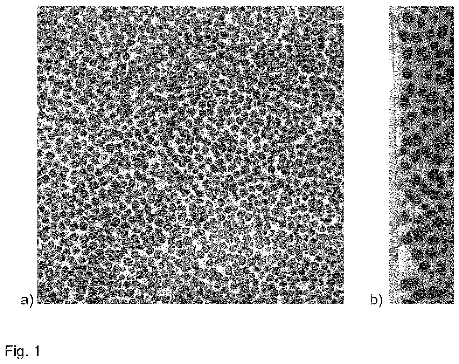

Fig. 1 zeigt beispielhaft ein Bild eines erfindungsgemäßen Formteils, welches, wie in Beispiel 4 beschrieben, hergestellt wurde, auf Basis der Mischung aus Beispiel 1. Fig. 1 a) stellt eine Frontansicht dar, wobei die Länge des abgebildeten Formteils (von links nach rechts) 16 cm beträgt. Fig. 1 b) stellt eine Seitenansicht dar, wobei die Stärke (d.h. die Dicke) des abgebildeten Formteils (vom linken zum rechten Rand des Formteils) 1,4 cm beträgt.

### Beispiel 5: Herstellung von erfindungsgemäßen Formteilen im Formteilautomat:

Aus den in den Beispielen 1 bis 3 hergestellten erfindungsgemäßen Mischungen wurden jeweils erfindungsgemäße Formteile unter Verwendung eines Formteilautomaten, das heißt unter Verwendung eines Partikelschaumwerkzeuges mit bedüsten Werkzeugwänden, hergestellt. Dafür wurden die erfindungsgemäßen Mischungen zunächst jeweils in einen siebartigen, für Wasserdampf durchlässigen, Metallkorb gegeben. Die verwendeten Metallkörbe waren mit einem Kunststoffnetz ausgekleidet, wobei das Kunststoffnetz über eine Maschenweite von 40 µm verfügte.

Nach dem Befüllen wurden die Metallkörbe in den Formteilautomaten gestellt und anschließend ein Herstellungsprogramm gestartet, umfassend folgende Schritte mit den angegebenen Parametern:
- Spülen für die Dauer von 1 s.
- Querbedampfen, beginnend an der festen Seite, jeweils mit einem Druck von 0,5 bar für die Dauer von 2 s an der festen und dann an der beweglichen Seite.
- Autoklavdampfen mit einem Druck von 0,5 bar für die Dauer von 2 s jeweils zunächst an der festen und dann an der beweglichen Seite.
- Kühlen in Intervallen:
   o An der beweglichen Seite dreimal Kühlen für jeweils die Dauer von 1,5 s, unterbrochen durch Kühlpausen mit jeweils einer Dauer von 2 s. Die Gesamtkühlzeit an der beweglichen Seite beträgt somit 4,5 s.
   o An der festen Seite dreimal Kühlen für jeweils 2 s, unterbrochen durch Kühlpausen mit jeweils einer Dauer von 2 s. Die Gesamtkühlzeit an der festen Seite beträgt somit 6 s.
- Entformen über Schaumdruck bei 0,01 bar.

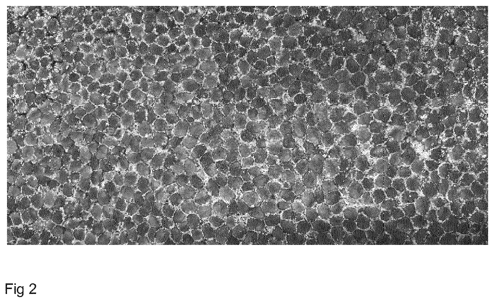

Fig. 2 zeigt beispielhaft die Frontansicht eines erfindungsgemäßen Formteils, welches, wie in Beispiel 5 beschrieben, hergestellt wurde. Die Länge des abgebildeten Formteils (von links nach rechts) beträgt 18,6 cm.

## Patentansprüche

1. Formteil, umfassend
- eine Matrixkomponente umfassend Melamin-Formaldehyd-Kondensat
und
- in die Matrixkomponente eingebettet
separate, geschäumte Polystyrol-Partikel
und
ein oder mehrere feste Additive ausgewählt aus der Gruppe bestehend aus
(i) anorganischen Füllstoffen und (ii) Flammschutzmitteln,
wobei
- das Verhältnis der Gesamtmasse des Melamin-Formaldehyd-Kondensats zu der Gesamtmasse der separaten, geschäumten Polystyrol-Partikel größer ist als 2,2
und
- die Dichte des Formteils im Bereich von 19 bis 50 kg/m³ liegt.

2. Formteil nach Anspruch 1, wobei
- die Wärmeleitfähigkeit des Formteils kleiner ist als 34 mW/m K, bevorzugt kleiner ist als 32 mW/m K, besonders bevorzugt gleich oder kleiner ist als 31 mW/m K, jeweils bestimmt gemäß DIN EN 12667:2001 mit einem Plattengerät (Poensgen) bei 10°C.

3. Formteil nach einem der vorangehenden Ansprüche, wobei die eingebetteten separaten, geschäumten Polystyrol-Partikel flammschutzmittelhaltig sind und/oder
die eingebetteten separaten, geschäumten Polystyrol-Partikel athermane Partikel enthalten, vorzugsweise Graphitpartikel.

4. Formteil nach einem der vorangehenden Ansprüche, wobei der Volumenanteil der separaten, geschäumten Polystyrol-Partikel im Formteil im Bereich von 90 bis 99 % liegt, vorzugsweise im Bereich von 95 bis 99 %.

5. Formteil nach einem der vorangehenden Ansprüche, wobei die
- Druckfestigkeit des Formteils im Bereich von 22-350 kPa liegt, bestimmt gemäß DIN EN 826:2013,
und/oder
- Biegefestigkeit des Formteils im Bereich von 22-450 kPa liegt, bestimmt gemäß DIN EN 12089:2013
und/oder
wobei das Formteil die Form einer Platte oder eines Blocks besitzt.

6. Mischung zur Herstellung eines Formteils nach einem der Ansprüche 1 bis 5, umfassend
- 33 bis 65 Gew.-% Melamin-Formaldehyd-Vorkondensat, bezogen auf die Gesamtmenge der Mischung,
oder
25 bis weniger als 33 Gew.-% Melamin-Formaldehyd-Vorkondensat, bezogen auf die Gesamtmenge der Mischung,
- 1 bis 3,5 Gew.-% einer organischen Säure ausgewählt aus der Gruppe bestehend aus Ameisensäure, Zitronensäure und deren Mischungen, bezogen auf die Gesamtmenge der Mischung,
oder
0,2 bis weniger als 1 Gew.-% einer organischen Säure ausgewählt aus der Gruppe bestehend aus Ameisensäure, Zitronensäure und deren Mischungen, bezogen auf die Gesamtmenge der Mischung,
- 6 bis 12 Gew.-% einer Gesamtmenge von einem oder mehreren festen Additiven ausgewählt aus der Gruppe bestehend aus (i) anorganischen Füllstoffen (ii) und Flammschutzmitteln, bezogen auf die Gesamtmenge der Mischung,
oder
mehr als 12 Gew.-% einer Gesamtmenge von einem oder mehreren festen Additiven ausgewählt aus der Gruppe bestehend aus (i) anorganischen Füllstoffen und (ii) Flammschutzmitteln, bezogen auf die Gesamtmenge der Mischung,
wobei jeweils vorzugsweise 50 Gew.-% oder mehr der Gesamtmenge des einen oder der mehreren festen Additive Flammschutzmittel sind,
- 25 bis 35 Gew.-% vorgeschäumte Polystyrol-Partikel, bezogen auf die Gesamtmenge der Mischung, mit einem Pentan-Gehalt von bis zu 4 Gew.-%,
- bis zu 30 Gew.-% insgesamt an inerten Flüssigkeiten ausgewählt aus der Gruppe bestehend aus Wasser und anderen inerten Flüssigkeiten, bezogen auf die Gesamtmenge der Mischung.

7. Mischung zur Herstellung eines Formteils nach Anspruch 6, umfassend
- 33 bis 37 Gew.-% Melamin-Formaldehyd-Vorkondensat, bezogen auf die Gesamtmenge der Mischung,
oder
25 bis weniger als 33 Gew.-% Melamin-Formaldehyd-Vorkondensat, vorzugsweise 25 bis 31 Gew.-%, bezogen auf die Gesamtmenge der Mischung,
- 1 bis 3 Gew.-% Ameisensäure, vorzugsweise 1,5 bis 2,5 Gew.-%, bezogen auf die Gesamtmenge der Mischung,
oder
0,2 bis weniger als 1 Gew.-% Ameisensäure, vorzugsweise 0,2 bis 0,5 Gew.-%, bezogen auf die Gesamtmenge der Mischung,
- 6 bis 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise 8 bis 10 Gew.-%, bezogen auf die Gesamtmenge der Mischung,
oder
mehr als 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise mehr als 12 bis 35 Gew.-%, besonders vorzugsweise mehr als 12 bis 30 Gew.-%, ganz besonders vorzugsweise mehr als 12 bis 25 Gew.-%, am bevorzugtesten mehr als 12 bis 22 Gew.-%, bezogen auf die Gesamtmenge der Mischung,
wobei jeweils vorzugsweise 50 Gew.-% oder mehr der Gesamtmenge des einen oder der mehreren festen Additive Flammschutzmittel sind,
- 25 bis 35 Gew.-% vorgeschäumte Polystyrol-Partikel, vorzugsweise 27 bis 33 Gew.-%, bezogen auf die Gesamtmenge der Mischung, mit einem Pentan-Gehalt von bis zu 4 Gew.-%, bevorzugt im Bereich von 0,1 bis 4 Gew.-%, vorzugsweise 0,1 bis 0,4 Gew.-% oder 2 bis 4 Gew.-%,
- 20 bis 30 Gew.-% insgesamt an inerten Flüssigkeiten ausgewählt aus der Gruppe bestehend aus Wasser und anderen inerten Flüssigkeiten, vorzugsweise 20 bis 30 Gew.-% Wasser, bezogen auf die Gesamtmenge der Mischung.

8. Mischung zur Herstellung eines Formteils nach Anspruch 6, umfassend
- 55 bis 65 Gew.-% pulverförmiges Melamin-Formaldehyd-Vorkondensat, bezogen auf die Gesamtmenge der Mischung,
- 1 bis 3,5 Gew.-% Zitronensäure, vorzugsweise 1,5 bis 2,8 Gew.-%, bezogen auf die Gesamtmenge der Mischung,
- 6 bis 12 Gew.-% einer Gesamtmenge von einem oder mehreren festen Additiven ausgewählt aus der Gruppe bestehend aus (i) anorganischen Füllstoffen und (ii) Flammschutzmitteln, vorzugsweise 8 bis 10 Gew.-%, bezogen auf die Gesamtmenge der Mischung,
- 25 bis 35 Gew.-% vorgeschäumte Polystyrol-Partikel, vorzugsweise 27 bis 33 Gew.-%, bezogen auf die Gesamtmenge der Mischung, mit einem Pentan-Gehalt von bis zu 4 Gew.-%, bevorzugt im Bereich von 0,1 bis 4 Gew.-%, vorzugsweise 0,1 bis 0,4 Gew.-% oder 2 bis 4 Gew.-%,
wobei die Mischung rieselfähig ist.

9. Mischung nach einem der vorangehenden Ansprüche,
wobei die vorgeschäumten Polystyrol-Partikel eine Schüttdichte im Bereich von 7 bis 20 kg/m³ besitzen, vorzugsweise 7 bis 15 kg/m³
und/oder
wobei die vorgeschäumten Polystyrol-Partikel flammschutzhaltig sind, wobei vorzugsweise
das in den flammschutzmittelhaltigen vorgeschäumten Polystyrol-Partikeln enthaltene Flammschutzmittel ausgewählt ist aus der Gruppe bestehend aus
- bromierte Polymere, vorzugsweise bromiertes Styrol-Butadien-Copolymer,
- anorganische Flammschutzmittel.

10. Mischung nach einem der vorangehenden Ansprüche, umfassend als Bestandteil
einen oder mehrere anorganische, mineralische Füllstoffe, vorzugsweise ausgewählt aus der Gruppe bestehend aus Talkum und Gips
und/oder
ein oder mehrere Flammschutzmittel ausgewählt aus der Gruppe bestehend aus Aluminiumsulfathexadecahydrat, Aluminiumhydroxid, Zinkborat und Blähgraphit.

11. Mischung nach einem der vorangehenden Ansprüche, wobei
flammschutzmittelhaltige vorgeschäumte Polystyrol-Partikel eingesetzt werden, wobei das in diesen flammschutzmittelhaltigen vorgeschäumten Polystyrol-Partikeln enthaltene Flammschutzmittel ausgewählt ist aus der Gruppe bestehend aus
- bromierte Polymere, vorzugsweise bromiertes Styrol-Butadien-Copolymer,
- anorganische Flammschutzmittel,
und wobei zudem
die Mischung als Bestandteil
einen oder mehrere anorganische, mineralische Füllstoffe, vorzugsweise ausgewählt aus der Gruppe bestehend aus Talkum und Gips
und/oder
ein oder mehrere Flammschutzmittel ausgewählt aus der Gruppe bestehend aus Aluminiumsulfathexadecahydrat, Aluminiumhydroxid, Zinkborat und Blähgraphit
umfasst.

12. Verfahren zur Herstellung eines Formteils, vorzugsweise eines Formteils nach einem der Ansprüche 1 bis 5, mit folgenden Schritten:
- Herstellen oder Bereitstellen einer Mischung nach einem der Ansprüche 6 bis 11,
- Einbringen der hergestellten oder bereitgestellten Mischung in ein formgebendes Werkzeug,
- Härten des in der Mischung enthaltenen Melamin-Formaldehyd-Vorkondensats, so dass das Formteil gebildet wird.

13. Verfahren nach Anspruch 12, wobei die in der Mischung enthaltenen vorgeschäumten Polystyrol-Partikel im formgebenden Werkzeug vor und/oder während des Härtens des Melamin-Formaldehyd-Vorkondensats
weiter aufgeschäumt werden, so dass ihre Dichte reduziert wird
oder
komprimiert werden, so dass ihre Dichte erhöht wird.

14. Verfahren nach Anspruch 12 oder 13, wobei das formgebende Werkzeug ausgewählt ist aus der Gruppe bestehend aus
- Partikelschaumwerkzeug mit bedüsten Werkzeugwänden und einer Füllvorrichtung zum Einfüllen von vorgeschäumten Polystyrol-Partikeln in das Werkzeug, wobei vorzugsweise die in der Mischung enthaltenen vorgeschäumten Polystyrol-Partikel im formgebenden Werkzeug vor und/oder während des Härtens des Melamin-Formaldehyd-Vorkondensats weiter aufgeschäumt werden, so dass ihre Dichte reduziert wird
oder
- Formwerkzeug mit Presskörpern zum Komprimieren von in das Formwerkzeug eingebrachtem kompressiblen Material, wobei vorzugsweise die in der Mischung enthaltenen vorgeschäumten Polystyrol-Partikel im formgebenden Werkzeug vor und/oder während des Härtens des Melamin-Formaldehyd-Vorkondensats komprimiert werden, so dass ihre Dichte erhöht wird.

15. Verwendung eines Formteils nach einem der Ansprüche 1 bis 5 als Isoliermaterial, vorzugsweise für Gebäude.

## Claims

1. A molding comprising
- a matrix component comprising melamine-formaldehyde condensate
and
- embedded in the matrix component
separate, foamed polystyrene particles
and
one or more solid additives selected from the group consisting of (i) inorganic fillers and (ii) flame retardants,
wherein
- the ratio of the total mass of the melamine-formaldehyde condensate to the total mass of the separate, foamed polystyrene particles is greater than 2.2
and
- the density of the molding is in the range from 19 to 50 kg/m³.

2. The molding according to claim 1, wherein
- the thermal conductivity of the molding is less than 34 mW/m K, preferably less than 32 mW/m K, particularly preferably equal to or less than 31 mW/m K,
in each case determined in accordance with DIN EN 12667:2001 using a plate instrument (Poensgen) at 10°C.

3. The molding according to either of the preceding claims, wherein
the embedded separate, foamed polystyrene particles are flame retardant-comprising
and/or
the embedded separate, foamed polystyrene particles comprise athermanous particles, preferably graphite particles.

4. The molding according to any of the preceding claims, wherein the proportion by volume of the separate, foamed polystyrene particles in the molding is in the range from 90 to 99%, preferably in the range from 95 to 99%.

5. The molding according to any of the preceding claims, wherein the
- compressive strength of the molding is in the range from 22-350 kPa, determined in accordance with DIN EN 826:2013,
and/or
- flexural strength of the molding is in the range from 22-450 kPa, determined in accordance with DIN EN 12089:2013
and/or
wherein the molding has the shape of a plate or a block.

6. A mixture for producing a molding according to any of claims 1 to 5, comprising
- from 33 to 65% by weight of melamine-formaldehyde precondensate, based on the total amount of the mixture,
or
from 25 to less than 33% by weight of melamine-formaldehyde precondensate, based on the total amount of the mixture,
- from 1 to 3.5% by weight of an organic acid selected from the group consisting of formic acid, citric acid and mixtures thereof, based on the total amount of the mixture,
or
from 0.2 to less than 1% by weight of an organic acid selected from the group consisting of formic acid, citric acid and mixtures thereof, based on the total amount of the mixture,
- from 6 to 12% by weight of a total amount of one or more solid additives selected from the group consisting of (i) inorganic fillers and (ii) flame retardants, based on the total amount of the mixture,
or
more than 12% by weight of a total amount of one or more solid additives selected from the group consisting of (i) inorganic fillers and (ii) flame retardants, based on the total amount of the mixture, where in each case preferably 50% by weight or more of the total amount of the one or more solid additives are flame retardants,
- from 25 to 35% by weight of prefoamed polystyrene particles, based on the total amount of the mixture, having a pentane content of up to 4% by weight,
- up to 30% by weight in total of inert liquids selected from the group consisting of water and other inert liquids, based on the total amount of the mixture.

7. The mixture for producing a molding according to claim 6, comprising
- from 33 to 37% by weight of melamine-formaldehyde precondensate, based on the total amount of the mixture,
or
from 25 to less than 33% by weight of melamine-formaldehyde precondensate, preferably from 25 to 31% by weight, based on the total amount of the mixture,
- from 1 to 3% by weight of formic acid, preferably from 1.5 to 2.5% by weight, based on the total amount of the mixture,
or
from 0.2 to less than 1% by weight of formic acid, preferably from 0.2 to 0.5% by weight, based on the total amount of the mixture,
- from 6 to 12% by weight of a total amount of one or more solid additives selected from the group consisting of (i) inorganic fillers and (ii) flame retardants, preferably from 8 to 10% by weight, based on the total amount of the mixture,
or
more than 12% by weight of a total amount of one or more solid additives selected from the group consisting of (i) inorganic fillers and (ii) flame retardants, preferably from more than 12 to 35% by weight, particularly preferably from more than 12 to 30% by weight, very particularly preferably from more than 12 to 25% by weight, most preferably from more than 12 to 22% by weight, based on the total amount of the mixture,
where in each case preferably 50% by weight or more of the total amount of the one or more solid additives are flame retardants,
- from 25 to 35% by weight of prefoamed polystyrene particles, preferably from 27 to 33% by weight, based on the total amount of the mixture, having a pentane content of up to 4% by weight, preferably in the range from 0.1 to 4% by weight, preferably from 0.1 to 0.4% by weight or from 2 to 4% by weight,
- from 20 to 30% by weight in total of inert liquids selected from the group consisting of water and other inert liquids, preferably from 20 to 30% by weight of water, based on the total amount of the mixture.

8. The mixture for producing a molding according to claim 6, comprising
- from 55 to 65% by weight of pulverulent melamine-formaldehyde precondensate, based on the total amount of the mixture,
- from 1 to 3.5% by weight of citric acid, preferably from 1.5 to 2.8% by weight, based on the total amount of the mixture,
- from 6 to 12% by weight of a total amount of one or more solid additives selected from the group consisting of (i) inorganic fillers and (ii) flame retardants, preferably from 8 to 10% by weight, based on the total amount of the mixture,
- from 25 to 35% by weight of prefoamed polystyrene particles, preferably from 27 to 33% by weight, based on the total amount of the mixture, having a pentane content of up to 4% by weight, preferably in the range from 0.1 to 4% by weight, more preferably from 0.1 to 0.4% by weight or from 2 to 4% by weight, where the mixture is free-flowing.

9. The mixture according to any of the preceding claims, wherein the prefoamed polystyrene particles have a bulk density in the range from 7 to 20 kg/m³, preferably from 7 to 15 kg/m³
and/or
wherein the prefoamed polystyrene particles are flame retardant-comprising, where
the flame retardant comprised in the flame retardant-comprising prefoamed polystyrene particles is preferably selected from the group consisting of
- brominated polymers, preferably brominated styrenebutadiene copolymer,
- inorganic flame retardants.

10. The mixture according to any of the preceding claims, comprising as a constituent
one or more inorganic, mineral fillers, preferably selected from the group consisting of talc and gypsum and/or
one or more flame retardants selected from the group consisting of aluminum sulfate hexadecahydrate, aluminum hydroxide, zinc borate and expandable graphite.

11. The mixture according to any of the preceding claims, wherein
flame retardant-comprising prefoamed polystyrene particles are used, where the flame retardant comprised in these flame retardant-comprising prefoamed polystyrene particles is selected from the group consisting of
- brominated polymers, preferably brominated styrene-butadiene copolymer,
- inorganic flame retardants,
and wherein in addition
the mixture comprises as a constituent
one or more inorganic, mineral fillers, preferably selected from the group consisting of talc and gypsum and/or
one or more flame retardants selected from the group consisting of aluminum sulfate hexadecahydrate, aluminum hydroxide, zinc borate and expandable graphite.

12. A process for producing a molding, preferably a molding according to any of claims 1 to 5, which comprises the following steps:
- production or provision of a mixture according to any of claims 6 to 11,
- introduction of the mixture produced or provided into a shaping tool,
- curing of the melamine-formaldehyde precondensate comprised in the mixture,
so as to form the molding.

13. The process according to claim 12, wherein the prefoamed polystyrene particles comprised in the mixture, in the shaping tool before and/or during curing of the melamine-formaldehyde precondensate,
are foamed further so as to reduce their density
or
are compressed so as to increase their density.

14. The process according to claim 12 or 13, wherein the shaping tool is selected from the group consisting of
- a particle foam tool having tool walls provided with nozzles and a filling apparatus for introducing prefoamed polystyrene particles into the tool, with the prefoamed polystyrene particles comprised in the mixture preferably being foamed further so as to reduce their density in the shaping tool before and/or during curing of the melamine-formaldehyde precondensate
or
- a shaping tool having pressing elements for compressing compressible material introduced into the shaping tool, with the prefoamed polystyrene particles comprised in the mixture preferably being compressed so as to increase their density in the shaping tool before and/or during curing of the melamine-formaldehyde precondensate.

15. The use of a molding according to any of claims 1 to 5 as insulating material, preferably for buildings.

## Revendications

1. Pièce moulée, comprenant
- un composant de matrice comprenant un condensat de mélamine-formaldéhyde
et
- incorporées dans le composant de matrice,
des particules de polystyrène distinctes, moussées
et
un ou plusieurs additifs solides choisis dans le groupe constitué par
(i) des charges inorganiques et (ii) des agents ignifugeants,
dans laquelle
- le rapport de la masse totale du condensat de mélamine-formaldéhyde sur la masse totale des particules de polystyrène distinctes, moussées est supérieur à 2,2
et
- la densité de la pièce moulée se situe dans la plage de 19 à 50 kg/m³.

2. Pièce moulée selon la revendication 1,
- la conductivité thermique de la pièce moulée étant inférieure à 34 mW/mK, préférablement inférieure à 32 mW/mK, particulièrement préférablement inférieure ou égale à 31 mW/mK, à chaque fois déterminée selon la norme DIN EN 12667:2001 avec un appareil à disque (Poensgen) à 10 °C.

3. Pièce moulée selon l'une quelconque des revendications précédentes, les particules de polystyrène distinctes, moussées incorporées contenant un agent ignifugeant et/ou les particules de polystyrène distinctes, moussées incorporées contenant des particules athermanes, de préférence des particules de graphite.

4. Pièce moulée selon l'une quelconque des revendications précédentes, la proportion volumique des particules de polystyrène distinctes, moussées dans la pièce moulée se situant dans la plage de 90 à 99 %, de préférence dans la plage de 95 à 99 %.

5. Pièce moulée selon l'une quelconque des revendications précédentes,
- la résistance à la compression de la pièce moulée se situant dans la plage de 22 à 350 kPa, déterminée selon la norme DIN EN 826:2013, et/ou
- la résistance à la flexion de la pièce moulée se situant dans la plage de 22 à 450 kPa, déterminée selon la norme DIN EN 12089:2013
et/ou
la pièce moulée possédant la forme d'une plaque ou d'un bloc.

6. Mélange pour la préparation d'une pièce moulée selon l'une quelconque des revendications 1 à 5, comprenant
- 33 à 65 % en poids de précondensat de mélamine-formaldéhyde, par rapport à la quantité totale du mélange,
ou
25 à moins de 33 % en poids de précondensat de mélamine-formaldéhyde, par rapport à la quantité totale du mélange
- 1 à 3,5 % en poids d'un acide organique choisi dans le groupe constitué par l'acide formique, l'acide citrique et leurs mélanges, par rapport à la quantité totale du mélange,
ou
0,2 à moins de 1 % en poids d'un acide organique choisi dans le groupe constitué par l'acide formique, l'acide citrique et leurs mélanges, par rapport à la quantité totale du mélange,
- 6 à 12 % en poids d'une quantité totale d'un ou plusieurs additifs solides choisis dans le groupe constitué par (i) des charges inorganiques et (ii) des agents ignifugeants, par rapport à la quantité totale du mélange,
ou
plus de 12 % en poids d'une quantité totale d'un ou plusieurs additifs solides choisis dans le groupe constitué par (i) des charges inorganiques et (ii) des agents ignifugeants, par rapport à la quantité totale du mélange,
à chaque fois de préférence 50 % en poids ou plus de la quantité totale de l'additif ou des additifs solides étant des agents ignifugeants,
- 25 à 35 % en poids de particules de polystyrène prémoussées, par rapport à la quantité totale du mélange, dotées d'une teneur en pentane allant jusqu'à 4 % en poids,
- jusqu'à 30 % en poids au total de liquides inertes choisis dans le groupe constitué par l'eau et d'autres liquides inertes, par rapport à la quantité totale du mélange.

7. Mélange pour la préparation d'une pièce moulée selon la revendication 6, comprenant
- 33 à 37 % en poids de précondensat de mélamine-formaldéhyde, par rapport à la quantité totale du mélange,
ou
25 à moins de 33 % en poids de précondensat de mélamine-formaldéhyde, de préférence 25 à 31 % en poids, par rapport à la quantité totale du mélange,
- 1 à 3 % en poids d'acide formique, de préférence 1,5 à 2,5 % en poids, par rapport à la quantité totale du mélange,
ou
0,2 à moins de 1 % en poids d'acide formique, de préférence 0,2 à 0,5 % en poids, par rapport à la quantité totale du mélange,
- 6 à 12 % en poids d'une quantité totale d'un ou plusieurs additifs solides choisis dans le groupe constitué par (i) des charges inorganiques et (ii) des agents ignifugeants, de préférence 8 à 10 % en poids, par rapport à la quantité totale du mélange,
ou
plus de 12 % en poids d'une quantité totale d'un ou plusieurs additifs solides choisis dans le groupe constitué par (i) des charges inorganiques et (ii) des agents ignifugeants, de préférence plus de 12 à 35 % en poids, particulièrement préférablement plus de 12 à 30 % en poids, tout particulièrement préférablement plus de 12 à 25 % en poids, le plus préférablement plus de 12 à 22 % en poids, par rapport à la quantité totale du mélange,
à chaque fois de préférence 50 % en poids ou plus de la quantité totale de l'additif ou des additifs solides étant des agents ignifugeants,
- 25 à 35 % en poids de particules de polystyrène prémoussées, de préférence 27 à 33 % en poids, par rapport à la quantité totale du mélange, dotées d'une teneur en pentane allant jusqu'à 4 % en poids, préférablement dans la plage de 0,1 à 4 % en poids, de préférence de 0,1 à 0,4 % en poids ou de 2 à 4 % en poids,
- 20 à 30 % en poids au total de liquides inertes choisis dans le groupe constitué par l'eau et d'autres liquides inertes, de préférence 20 à 30 % en poids d'eau, par rapport à la quantité totale du mélange.

8. Mélange pour la préparation d'une pièce moulée selon la revendication 6, comprenant
- 55 à 65 % en poids de précondensat de mélamine-formaldéhyde sous forme de poudre, par rapport à la quantité totale du mélange,
- 1 à 3,5 % en poids d'acide citrique, de préférence 1,5 à 2,8 % en poids, par rapport à la quantité totale du mélange,
- 6 à 12 % en poids d'une quantité totale d'un ou plusieurs additifs solides choisis dans le groupe constitué par (i) des charges inorganiques et (ii) des agents ignifugeants, de préférence 8 à 10 % en poids, par rapport à la quantité totale du mélange,
- 25 à 35 % en poids de particules de polystyrène prémoussées, de préférence 27 à 33 % en poids, par rapport à la quantité totale du mélange, dotées d'une teneur en pentane allant jusqu'à 4 % en poids, préférablement dans la plage de 0,1 à 4 % en poids, de préférence de 0,1 à 0,4 % en poids ou de 2 à 4 % en poids,
le mélange étant à écoulement libre.

9. Mélange selon l'une quelconque des revendications précédentes,
les particules de polystyrène prémoussées possédant une densité apparente dans la plage de 7 à 20 kg/m³, de préférence de 7 à 15 kg/m³
et/ou
les particules de polystyrène prémoussées contenant un agent ignifugeant, de préférence l'agent ignifugeant contenu dans les particules de polystyrène prémoussées contenant un agent ignifugeant étant choisi dans le groupe constitué par
- des polymères bromés, de préférence un copolymère de styrène-butadiène, bromé,
- des agents ignifugeants inorganiques.

10. Mélange selon l'une quelconque des revendications précédentes, comprenant en tant qu'ingrédient une ou plusieurs charges inorganiques, minérales, de préférence choisies dans le groupe constitué par le talc et le gypse
et/ou
un ou plusieurs agents ignifugeants choisis dans le groupe constitué par l'hexadécahydrate de sulfate d'aluminium, l'hydroxyde d'aluminium, le borate de zinc et le graphite expansé.

11. Mélange selon l'une quelconque des revendications précédentes,
des particules de polystyrène prémoussées contenant un agent ignifugeant étant utilisées, l'agent ignifugeant contenu dans ces particules de polystyrène prémoussées contenant un agent ignifugeant étant choisi dans le groupe constitué par
- des polymères bromés, de préférence un copolymère de styrène-butadiène, bromé,
- des agents ignifugeants inorganiques,
et en outre
le mélange comprenant en tant qu'ingrédient
une ou plusieurs charges inorganiques, minérales, de préférence choisies dans le groupe constitué par le talc et le gypse
et/ou
un ou plusieurs agents ignifugeants choisis dans le groupe constitué par l'hexadécahydrate de sulfate d'aluminium, l'hydroxyde d'aluminium, le borate de zinc et le graphite expansé.

12. Procédé de préparation d'une pièce moulée, de préférence d'une pièce moulée selon l'une quelconque des revendications 1 à 5, comportant les étapes suivantes :
- préparation ou mise à disposition d'un mélange selon l'une quelconque des revendications 6 à 11,
- introduction du mélange préparé ou mis à disposition dans un outil de moulage,
- durcissement du précondensat de mélamine-formaldéhyde contenu dans le mélange,
de sorte que la pièce moulée soit formée.

13. Procédé selon la revendication 12, les particules de polystyrène prémoussées contenues dans le mélange dans l'outil de moulage étant
moussées davantage avant et/ou pendant le durcissement du précondensat de mélamine-formaldéhyde, de sorte que leur densité est réduite ou
comprimées, de sorte que leur densité est augmentée.

14. Procédé selon la revendication 12 ou 13, l'outil de moulage étant choisi dans le groupe constitué par
- un outil de moulage de mousse de particules comportant des parois d'outil arrosées et un dispositif de remplissage pour le remplissage de l'outil avec des particules de polystyrène prémoussées, de préférence les particules de polystyrène prémoussées contenues dans le mélange dans l'outil de moulage étant moussées davantage avant et/ou pendant le durcissement du précondensat de mélamine-formaldéhyde, de sorte que leur densité est réduite
ou
- un outil de moulage comportant des corps de pression pour la compression de matériau compressible introduit dans l'outil de moulage, de préférence les particules de polystyrène prémoussées contenues dans le mélange dans l'outil de moulage étant comprimées avant et/ou pendant le durcissement du précondensat de mélamine-formaldéhyde, de sorte que leur densité est augmentée.

15. Utilisation d'une pièce moulée selon l'une quelconque des revendications 1 à 5 en tant que matériau isolant, de préférence pour le bâtiment.
